# EUROPEAN PATENT APPLICATION

(11) **EP 4 787 719 A1**
(43) Date of publication of application: **05.08.2026**
(21) Application number: 24940555.6
(22) Date of filing: 23.12.2024
(51) Int. Cl.: H04B 7/04

(54) **ANTENNA APPARATUS AND ELECTRONIC DEVICE**

(30) Priority: 07.05.2024 CN 202410571737; 18.07.2024 CN 202410971327
(71) Applicant: HUAWEI TECHNOLOGIES CO., LTD., Shenzhen 518129 (CN)
(72) Inventor: GONG, Yiwen, Shenzhen, Guangdong 518129 (CN); WANG, Jikang, Shenzhen, Guangdong 518129 (CN); LI, Changzhong, Shenzhen, Guangdong 518129 (CN); TANG, Rundong, Shenzhen, Guangdong 518129 (CN); XIE, Zhiyuan, Shenzhen, Guangdong 518129 (CN)
(74) Representative: Maiwald GmbH
(86) International application number: PCT/CN2024/141521
(87) International publication number: WO 2025/232218

(57) **Abstract**

Embodiments of this application provide an antenna apparatus and an electronic device, and relate to the field of antenna technologies, to implement diversified communication functions in limited architecture space. In the antenna apparatus, a first satellite communication antenna and a first ground network communication antenna in an antenna structure share a first stub. A first satellite transmit end of a communication chip sends a radio frequency signal of a first satellite operating frequency band, and a first ground network transmit end of the communication chip sends a radio frequency signal of a first ground network operating frequency band. A first gating switch and a first power amplifier are coupled between the first satellite transmit end and a first electrical connection end of the first stub. The first gating switch and a second power amplifier are further coupled between the first ground network transmit end and the first electrical connection end. The first gating switch is located in a clearance area. In this application, different stubs and different feed ends do not need to be independently disposed for the first satellite communication antenna and the first ground network communication antenna, thereby implementing diversified communication functions in limited architecture space.

## Description

This application claims priorities to Chinese Patent Application No. 202410571737.2, filed with the China National Intellectual Property Administration on May 7, 2024 and entitled "FOLDABLE TERMINAL DEVICE", and to Chinese Patent Application No. 202410971327.7, filed with the China National Intellectual Property Administration on July 18, 2024 and entitled "ANTENNA APPARATUS AND ELECTRONIC DEVICE", both of which are incorporated herein by reference in their entireties.

### TECHNICAL FIELD

This application relates to the field of antenna technologies, and in particular, to an antenna apparatus and an electronic device.

### BACKGROUND

With continuous development of communication technologies, electronic devices are developing toward miniaturization, lightness and thinness, and high screen-to-body ratios. In addition, as an electronic device has an increasingly high integration requirement, a quantity of internal components of the electronic device increases, causing increasingly smaller internal architecture space of the electronic device. This further compresses available space of an antenna, affecting performance of the antenna. On this basis, with increasing requirements of users for diversified communication functions, it is increasingly difficult to implement diversified communication functions in limited architecture space.

### SUMMARY

This application provides an antenna apparatus and an electronic device, to implement diversified communication functions in limited architecture space.

To achieve the foregoing objective, this application uses the following technical solutions.

According to one aspect of this application, an antenna apparatus is provided. The antenna apparatus includes a ground plane, an antenna structure, a communication chip, a first power amplifier, a second power amplifier, and a first gating switch. The antenna apparatus has a clearance area between the ground plane and the antenna structure. The antenna structure includes a first satellite communication antenna and a first ground network communication antenna. The first satellite communication antenna includes a first stub, and the first stub has a first electrical connection end. The first ground network communication antenna includes the first stub. The communication chip has a first satellite transmit end and a first ground network transmit end. The first satellite transmit end is configured to send a radio frequency signal of a first satellite operating frequency band, and the first ground network transmit end is configured to send a radio frequency signal of a first ground network operating frequency band. The first power amplifier is coupled to the first satellite transmit end, and the second power amplifier is coupled to the first ground network transmit end. Efficiency of the first power amplifier is different from efficiency of the second power amplifier. The first gating switch is coupled between the first power amplifier and the first electrical connection end. The first gating switch is further coupled between the second power amplifier and the first electrical connection end. The first gating switch is located in the clearance area. The first gating switch is configured to connect the first satellite transmit end or the first ground network transmit end to the first electrical connection end.

In conclusion, the antenna apparatus provided in this embodiment of this application includes the antenna structure, and the communication chip in the antenna structure may have different signal transmit ends, for example, the first satellite transmit end and the first ground network transmit end. In this case, the communication chip may send the radio frequency signal of the first satellite operating frequency band through the first satellite transmit end, and may also send the radio frequency signal of the first ground network operating frequency band through the first ground network transmit end. In this way, the communication chip is capable of sending radio frequency signals of two different operating frequency bands. Therefore, two independent chips configured to send the radio frequency signals of the different operating frequency bands do not need to be disposed, so that the communication chip can have a smaller size than the two independent chips, thereby helping improve space utilization of the antenna apparatus. On this basis, to meet a system energy loss requirement, power amplification required by different signal transmit ends of the communication chip such as the first satellite transmit end and the first ground network transmit end to respectively send radio frequency signals may have different efficiency. In this case, compared with a solution in which the first satellite transmit end and the first ground network transmit end share a same power amplifier, in this embodiment of this application, the first satellite transmit end and the first ground network transmit end may be respectively connected to the first power amplifier and the second power amplifier that have different efficiency, to make both the first power amplifier and the second power amplifier operate with maximum efficiency, so that respective input power of the first power amplifier and the second power amplifier can be reduced, thereby meeting a system energy loss requirement.

In addition, to further improve space utilization of the antenna apparatus, the first satellite communication antenna and the first ground network communication antenna include a same stub, that is, the first stub. The first stub has the first electrical connection end. To enable one of the first satellite communication antenna and the first ground network communication antenna that share a stub to independently operate at one moment, the communication chip may send a control signal to the first gating switch to control the first gating switch to connect the first satellite transmit end to the first electrical connection end. Therefore, the first satellite transmit end, the first power amplifier, the first gating switch, and the first electrical connection end may form a communication link of to-be-sent data of the first satellite communication antenna, so that the radio frequency signal of the first satellite operating frequency band that is sent by the first satellite transmit end is transmitted to the first electrical connection end, to feed the first stub, thereby making the first stub serve as the first satellite communication antenna to send the radio frequency signal of the first satellite operating frequency band. Alternatively, the communication chip may send a control signal to the first gating switch to control the first gating switch to connect the first ground network transmit end to the first electrical connection end. Therefore, the first ground network transmit end, the second power amplifier, the first gating switch, and the first electrical connection end may form a communication link of to-be-sent data of the first ground network communication antenna, so that the radio frequency signal of the first ground network operating frequency band that is sent by the first ground network transmit end is transmitted to the first electrical connection end, to feed the first stub, thereby making the first stub serve as the first ground network communication antenna to send the radio frequency signal of the first ground network operating frequency band.

Based on this, the first satellite communication antenna and the first ground network communication antenna may share a same stub (that is, the first stub), and both feed ends are the first electrical connection end of the first stub. In this way, different stubs and different feed ends do not need to be independently disposed for the first satellite communication antenna and the first ground network communication antenna, so that a quantity of stubs and a quantity of feed ends in the antenna apparatus can be reduced, to save internal space of an electronic device having the wire apparatus and improve space utilization of the antenna apparatus, thereby implementing diversified communication functions in limited architecture space. Therefore, the antenna apparatus provided in this embodiment of this application can improve space utilization of the antenna apparatus on the basis that a system energy loss requirement is met. In addition, the first gating switch located in the clearance area has different conduction states, so that the first satellite communication antenna and the first ground network communication antenna may not be in an operating state at the same time. For example, when the first gating switch connects the first satellite transmit end to the first electrical connection end, the first satellite communication antenna is in an operating state. In this case, the first ground network communication antenna is in a non-operating state. Similarly, when the first gating switch connects the first ground network transmit end to the first electrical connection end, the first ground network communication antenna is in an operating state. In this case, the first satellite communication antenna is in a non-operating state. In this way, a probability of mutual interference between the communication link of the to-be-sent data of the first ground network communication antenna and the communication link of the to-be-sent data of the first ground network communication antenna can be reduced, thereby reducing signal loss.

In an optional implementation, the communication chip further includes a first satellite first receive end, and the first satellite first receive end is configured to receive the radio frequency signal of the first satellite operating frequency band. The antenna apparatus further includes a first radio frequency switch, the first radio frequency switch is coupled between the first satellite transmit end and the first gating switch, the first radio frequency switch is further coupled between the first satellite first receive end and the first gating switch, and the first radio frequency switch is configured to connect the first satellite transmit end or the first satellite first receive end to the first gating switch. In this way, the communication chip may send a control signal to the first radio frequency switch to control the first radio frequency switch to connect the first satellite transmit end to the first gating switch, so that the communication link of the to-be-sent data of the first satellite communication antenna is connected to the first gating switch. Based on this, when the communication chip sends a control signal to the first gating switch to control the first gating switch to connect the first radio frequency switch to the first electrical connection end, the radio frequency signal of the first satellite operating frequency band that is sent by the communication chip through the first satellite transmit end may be transmitted to the first electrical connection end through the communication link of the to-be-sent data, to feed the first stub, thereby making the first stub serve as the first satellite communication antenna to send the radio frequency signal of the first satellite operating frequency band. Alternatively, the communication chip sends a control signal to the first radio frequency switch to control the first radio frequency switch to connect the first satellite first receive end to the first gating switch, so that a communication link of to-be-received data of the first satellite communication antenna is connected to the first gating switch. Based on this, when the communication chip sends a control signal to the first gating switch to control the first gating switch to connect the first radio frequency switch to the first electrical connection end, the first stub may serve as at least a part of the first satellite communication antenna to receive the radio frequency signal of the first satellite operating frequency band, and transmit the signal to the first satellite first receive end through the communication link of the to-be-received data, so that the communication chip performs data processing. In addition, when the first gating switch selects the first stub as at least a part of the first ground network communication antenna to receive and send a signal, the foregoing radio frequency switch does not need to be disposed in a signal path between the first stub and the first ground network transmit end, so that signal loss in the path can be reduced. In addition, a performance indicator of the first gating switch located in the clearance area may include voltage and current. Therefore, signal loss can be further reduced by adjusting voltage or current at two ends of the first gating switch.

In an optional implementation, the antenna apparatus further includes a first radio frequency test base and a second radio frequency test base. The first radio frequency test base is coupled between the first gating switch and the first satellite transmit end. The first radio frequency test base may be connected to a test instrument, to test and adjust a related parameter for impedance matching on a communication link of the first satellite communication antenna. The second radio frequency test base is coupled between the first gating switch and the first ground network transmit end. The second radio frequency test base may be connected to a test instrument, to test and adjust a related parameter for impedance matching on a communication link of the first ground network communication antenna.

In an optional implementation, the antenna apparatus further includes a first impedance matching network. The first impedance matching network is coupled between the first gating switch and at least one of the first radio frequency test base or the second radio frequency test base; or a first part of the first impedance matching network is coupled between the first gating switch and at least one of the first radio frequency test base or the second radio frequency test base, and a second part of the first impedance matching network is coupled between the first gating switch and the first electrical connection end. The first impedance matching network may perform impedance matching on the communication link of at least one of the first satellite communication antenna or the first ground network communication antenna. In this way, when the first gating switch connects the first electrical connection end to the first radio frequency switch, the first gating switch disconnects the first electrical connection end from the first ground network transmit end, so that a signal from the first ground network transmit end does not affect the communication link of the first satellite communication antenna, and effect of impedance matching on the communication link of the first satellite communication antenna matches a structure and a related parameter of the first impedance matching network, thereby improving radiant power of the first satellite communication antenna and reducing signal loss. Alternatively, when the first gating switch connects the first electrical connection end to the first ground network transmit end, the first gating switch disconnects the first electrical connection end from the first satellite transmit end, so that a signal from the first satellite transmit end does not affect the communication link of the first ground network communication antenna, and effect of impedance matching on the communication link of the first ground network communication antenna matches a structure and a related parameter of the first impedance matching network, thereby improving radiant power of the first ground network communication antenna and reducing signal loss.

In an optional implementation, the antenna apparatus further includes a first impedance matching network, and the first impedance matching network is coupled between the first gating switch and the first electrical connection end. Technical effects of the first impedance matching network are the same as those described above, and details are not described herein again.

In an optional implementation, the first satellite communication antenna further includes a second stub, and the second stub is spaced apart from the first stub. The second stub has a second electrical connection end. The communication chip further has a first satellite second receive end. The first satellite second receive end is configured to receive the radio frequency signal of the first satellite operating frequency band. The first satellite second receive end is coupled to the second electrical connection end. In this case, when the first satellite communication antenna sends the radio frequency signal of the first satellite operating frequency band, the first stub is in an operating state, to send the radio frequency signal of the first satellite operating frequency band. When the first satellite communication antenna receives the radio frequency signal of the first satellite operating frequency band, the first stub and the second stub may be in an operating state at the same time, to receive the radio frequency signal of the first satellite operating frequency band. This can expand a width and a gain of a receive beam of the first satellite communication antenna, thereby making it easier for the electronic device to implement a satellite alignment function.

In an optional implementation, the antenna structure further includes a second satellite communication antenna, and the second satellite communication antenna includes the second stub. The communication chip has a second satellite transmit end and a second satellite first receive end. The second satellite transmit end is configured to send a radio frequency signal of a second satellite operating frequency band, and the second satellite first receive end is configured to receive the radio frequency signal of the second satellite operating frequency band. In addition, the antenna apparatus further includes a second radio frequency switch, and the second radio frequency switch is coupled between the first satellite second receive end and the second electrical connection end. The second radio frequency switch is further coupled between the second satellite transmit end and the second electrical connection end. The second radio frequency switch is further coupled between the second satellite first receive end and the second electrical connection end. The second radio frequency switch is configured to connect the first satellite second receive end, the second satellite transmit end, or the second satellite first receive end to the second electrical connection end. For example, the first satellite communication antenna may be a high earth orbit satellite antenna, and the second satellite communication antenna may be a low earth orbit satellite antenna. Therefore, in limited space, the electronic device may integrate two satellite communication antennas, and for the two satellites, a user may perform selection according to a requirement or the electronic device may perform selection based on a region in which the user is located, to implement diversified communication functions.

In an optional implementation, the antenna apparatus further includes a second gating switch, a third radio frequency test base, and a second impedance matching network. The second gating switch is coupled between the second radio frequency switch and the second electrical connection end, and the second gating switch is located in the clearance area. The third radio frequency test base is coupled between the second gating switch and the second radio frequency switch. At least a part of the second impedance matching network may be coupled between the second gating switch and the second electrical connection end; or at least a part of the second impedance matching network is coupled to a side that is of the second gating switch and that is away from the second electrical connection end. For example, the second impedance matching network is coupled between the second gating switch and the third radio frequency test base. Alternatively, for another example, a first part of the second impedance matching network is coupled between the second gating switch and the second electrical connection end, and a second part of the second impedance matching network is coupled between the second gating switch and the third radio frequency test base. When the first gating switch connects the first ground network transmit end to the first electrical connection end, the second gating switch is configured to disconnect at least a part of the second impedance matching network from the second electrical connection end. The second impedance matching network may perform impedance matching on a communication link of the second satellite communication antenna. The third radio frequency test base may be connected to a test instrument, to test and adjust a related parameter for impedance matching on the communication link of the second satellite communication antenna. Based on this, in a case in which the electronic device is in a folded state, when the first ground network communication antenna receives and sends the radio frequency signal of the first ground network operating frequency band, to prevent the second impedance matching network from affecting a signal on the second stub serving as a parasitic antenna of the first ground network communication antenna, the second gating switch may disconnect at least the part of the second impedance matching network from the second electrical connection end of the second stub, thereby increasing an aperture and a gain of the first ground network communication antenna.

In an optional implementation, the first electrical connection end is located at an end that is of the first stub and that is away from the second stub, and the second electrical connection end is located at an end that is of the second stub and that is away from the first stub. In this case, the first electrical connection end of the first stub may be located at the end that is of the first stub and that is away from the second stub, so that the first electrical connection end can be disposed at an open end of the first stub, thereby helping increase an antenna aperture. Similarly, the second electrical connection end may be located at the end that is of the second stub and that is away from the first stub, so that the second electrical connection end can be disposed at an open end of the second stub, thereby increasing an antenna aperture.

In an optional implementation, the second satellite communication antenna further includes a third stub, the third stub is spaced apart from the first stub and the second stub, and the third stub has a third electrical connection end. The communication chip further has a second satellite second receive end, the second satellite second receive end is configured to receive the radio frequency signal of the second satellite operating frequency band, and the second satellite second receive end is coupled to the third electrical connection end. In this case, when the second satellite communication antenna sends the radio frequency signal of the second satellite operating frequency band, the second stub is in an operating state, to send the radio frequency signal of the second satellite operating frequency band. When the second satellite communication antenna receives the radio frequency signal of the second satellite operating frequency band, the second stub and the third stub are in an operating state at the same time, to receive the radio frequency signal of the second satellite operating frequency band. This can expand a width and a gain of a receive beam of the second satellite communication antenna, thereby making it easier for the electronic device to implement a satellite alignment function.

In an optional implementation, the second satellite communication antenna further includes the first stub. The communication chip further has a second satellite second receive end, the second satellite second receive end is configured to receive the radio frequency signal of the second satellite operating frequency band, and the second satellite second receive end is coupled to the first electrical connection end. Similarly, when the second satellite communication antenna sends the radio frequency signal of the second satellite operating frequency band, the second stub is in an operating state, to send the radio frequency signal of the second satellite operating frequency band. When the second satellite communication antenna receives the radio frequency signal of the second satellite operating frequency band, the second stub and the first stub are in an operating state at the same time, to receive the radio frequency signal of the second satellite operating frequency band. This can expand a width and a gain of a receive beam of the second satellite communication antenna, thereby making it easier for the electronic device to implement a satellite alignment function.

In an optional implementation, the antenna structure further includes a third satellite communication antenna, the third satellite communication antenna includes a fourth stub, the fourth stub is spaced apart from the first stub, and the fourth stub has a fourth electrical connection end. The communication chip further has a third satellite transmit end and a third satellite receive end, the third satellite transmit end is configured to send a radio frequency signal of a third satellite operating frequency band, and the third satellite receive end is configured to receive the radio frequency signal of the third satellite operating frequency band. The antenna apparatus further includes a third radio frequency switch, where the third radio frequency switch is coupled between the third satellite transmit end and the fourth electrical connection end, the third radio frequency switch is further coupled between the third satellite receive end and the fourth electrical connection end, and the third radio frequency switch is configured to connect the third satellite transmit end or the third satellite receive end to the fourth electrical connection end. For example, the third satellite communication antenna may be a high earth orbit satellite communication antenna, and the third satellite communication antenna may be configured only to receive and send a short message service message. The third satellite communication antenna may also be referred to as a satellite short message service antenna. Based on this, in limited space, the electronic device may integrate three satellite communication antennas, and for the two satellites, a user may perform selection according to a requirement or the electronic device may perform selection based on a region in which the user is located, to implement diversified communication functions.

In an optional implementation, the antenna structure further includes a satellite positioning antenna, and the satellite positioning antenna includes the fourth stub. The communication chip further has a positioning satellite receive end, and the positioning satellite receive end is configured to receive a radio frequency signal of a fourth satellite operating frequency band. The third radio frequency switch is further coupled between the positioning satellite receive end and the fourth electrical connection end. The third radio frequency switch is configured to connect the third satellite transmit end, the third satellite receive end, or the positioning satellite receive end to the fourth electrical connection end. The satellite positioning antenna and the third satellite communication antenna may share the fourth stub. Therefore, in limited space, the electronic device may integrate three satellite communication antennas and one satellite positioning antenna, to implement diversified communication functions.

In an optional implementation, the antenna structure further includes a second ground network communication antenna, and the second ground network communication antenna includes the fourth stub. The communication chip further has a second ground network transmit end. The second ground network transmit end is configured to send a radio frequency signal of a second ground network operating frequency band. The third radio frequency switch is further coupled between the second ground network transmit end and the fourth electrical connection end. The third radio frequency switch is configured to connect the third satellite transmit end, the third satellite receive end, or the second ground network transmit end to the fourth electrical connection end. The second ground network communication antenna and the third satellite communication antenna may share the fourth stub. Therefore, in limited space, the electronic device can implement diversified communication functions.

In an optional implementation, the antenna structure further includes a third ground network communication antenna, the third ground network communication antenna includes a fifth stub, the fifth stub is spaced apart from the first stub, and the fifth stub has a fifth electrical connection end. The communication chip further has a third ground network transmit end. The third ground network transmit end is configured to send a radio frequency signal of a third ground network operating frequency band. The third ground network transmit end is coupled to the fifth electrical connection end. For example, the second ground network communication antenna and the third ground network communication antenna may be Wi-Fi antennas with different frequency bands, so that diversified communication functions can be implemented.

In an optional implementation, the communication chip includes a first satellite communication chip and a first ground network communication chip. The first satellite communication chip has the first satellite transmit end. The first ground network communication chip has the first ground network transmit end. For example, the first satellite communication chip and the first ground network communication chip may be respectively independent packaged chips. Alternatively, for another example, the first satellite communication chip and the first ground network communication chip may be independent bare chips, and are packaged in a same chip package. This is not limited in this application.

In an optional implementation, the first ground network communication chip is a cellular communication chip, and the first ground network operating frequency band is a cellular communication frequency band, so that the electronic device can have a cellular communication function.

According to another aspect of this application, an antenna apparatus is provided. The antenna apparatus may include an antenna structure and a communication chip. The antenna structure may include a first satellite communication antenna and a second satellite communication antenna. The first satellite communication antenna includes a first stub and a second stub. The first stub is spaced apart from the second stub are spaced apart, the first stub has a first electrical connection end, and the second stub has a second electrical connection end. The second satellite communication antenna includes the second stub. The communication chip has a first satellite transmit end, a first satellite first receive end, a first satellite second receive end, a second satellite transmit end, and a second satellite first receive end. The first satellite transmit end and the first satellite first receive end are coupled to the first electrical connection end. The first satellite second receive end, the second satellite transmit end, and the second satellite first receive end are coupled to the second electrical connection end. The first satellite transmit end is configured to send a radio frequency signal of a first satellite operating frequency band, and the first satellite first receive end and the first satellite second receive end are configured to receive the radio frequency signal of the first satellite operating frequency band. Based on this, the first satellite communication antenna has one transmit end and two receive ends. Therefore, the first satellite communication antenna may have a 1T2R function. In addition, the second satellite transmit end is configured to send a radio frequency signal of a second satellite operating frequency band, and the second satellite first receive end is configured to receive the radio frequency signal of the second satellite operating frequency band. When the first satellite communication antenna or the second satellite communication antenna is configured to be in an operating state, the antenna in the operating state may implement at least one of a satellite call or satellite short message service message receiving and sending. For example, the first satellite communication antenna may be a high earth orbit satellite antenna, and the second satellite communication antenna may be a low earth orbit satellite antenna. Therefore, in limited space, an electronic device may integrate two satellite communication antennas, and for the two satellites, a user may perform selection according to a requirement or the electronic device may perform selection based on a region in which the user is located, to implement diversified communication functions. When the first satellite communication antenna operates, and the second satellite communication antenna is in a non-operating state, the second stub of the second satellite communication antenna may be reused as a receive antenna of the first satellite communication antenna, so that the first satellite communication antenna has a 1T2R function. In addition, when the user selects a satellite communication antenna having a 1T2R function, for example, the first satellite communication antenna, to make a satellite call, a width and a gain of a receive beam of the satellite communication antenna can be expanded, thereby improving sensitivity of the satellite communication antenna as a receive antenna.

In an optional implementation, the antenna structure further includes a first ground network communication antenna, and the first ground network communication antenna includes the first stub. The communication chip further has a first ground network transmit end, and the first ground network transmit end is coupled to the first electrical connection end. For example, the first ground network communication antenna may be a cellular antenna. In limited space, the electronic device may integrate three satellite communication antennas and one first ground network communication antenna, to implement diversified communication functions.

In an optional implementation, the antenna apparatus further includes a first radio frequency switch and a second radio frequency switch. The first radio frequency switch is coupled between the first satellite transmit end and the first gating switch, and the first radio frequency switch is further coupled between the first satellite first receive end and the first gating switch. The first radio frequency switch is configured to connect the first satellite transmit end or the first satellite first receive end to the first gating switch. The second radio frequency switch is coupled between the first satellite second receive end and the second electrical connection end. The second radio frequency switch is further coupled between the second satellite transmit end and the second electrical connection end, and the second radio frequency switch is further coupled between the second satellite first receive end and the second electrical connection end. The second radio frequency switch is configured to connect the first satellite second receive end, the second satellite transmit end, or the second satellite first receive end to the second electrical connection end. Technical effects of the first radio frequency switch and the second radio frequency switch are the same as those described above, and details are not described herein again.

In an optional implementation, the second satellite communication antenna further includes a third stub, the third stub is spaced apart from the first stub and the second stub, and the third stub has a third electrical connection end. The communication chip further has a second satellite second receive end, the second satellite second receive end is configured to receive the radio frequency signal of the second satellite operating frequency band, and the second satellite second receive end is coupled to the third electrical connection end. The second stub and the third stub each may serve as a receive antenna of the second satellite communication antenna. This can expand a width and a gain of a receive beam of the second satellite communication antenna, thereby making it easier for the electronic device to implement a satellite alignment function.

In an optional implementation, the second satellite communication antenna further includes the first stub. The communication chip further has a second satellite second receive end, and the second satellite second receive end is configured to receive the radio frequency signal of the second satellite operating frequency band. The second satellite second receive end is coupled to the first electrical connection end. The second stub and the first stub each may serve as a receive antenna of the second satellite communication antenna. This can expand a width and a gain of a receive beam of the second satellite communication antenna, thereby making it easier for the electronic device to implement a satellite alignment function.

In an optional implementation, the antenna structure further includes a third satellite communication antenna, the third satellite communication antenna includes a fourth stub, the fourth stub is spaced apart from the first stub, and the fourth stub has a fourth electrical connection end. The communication chip further has a third satellite transmit end and a third satellite receive end, the third satellite transmit end is configured to send a radio frequency signal of a third satellite operating frequency band, and the third satellite receive end is configured to receive the radio frequency signal of the third satellite operating frequency band. The antenna apparatus further includes a third radio frequency switch, where the third radio frequency switch is coupled between the third satellite transmit end and the fourth electrical connection end, the third radio frequency switch is further coupled between the third satellite receive end and the fourth electrical connection end, and the third radio frequency switch is configured to connect the third satellite transmit end or the third satellite receive end to the fourth electrical connection end. Technical effects of the third satellite communication antenna are the same as those described above, and details are not described herein again.

According to still another aspect of this application, an antenna apparatus is provided. The antenna apparatus includes an antenna structure and a communication chip. The antenna structure includes a first satellite communication antenna and a satellite short message service antenna. The first satellite communication antenna is configured to implement at least one of a satellite call or satellite short message service message receiving and sending. The satellite short message service antenna may be the foregoing third satellite communication antenna. The first satellite communication antenna includes a first stub and a second stub. The first stub is spaced apart from the second stub, the first stub has a first electrical connection end, and the second stub has a second electrical connection end. The satellite short message service antenna includes a fourth stub, the fourth stub is spaced apart from the first stub and the second stub, and the fourth stub has a fourth electrical connection end. The communication chip has a first satellite transmit end, a first satellite first receive end, a first satellite second receive end, a third satellite transmit end, and a third satellite receive end. The first satellite transmit end and the first satellite first receive end are coupled to the first electrical connection end, the first satellite second receive end is coupled to the second electrical connection end, and the third satellite transmit end or the third satellite receive end is coupled to the fourth electrical connection end. The first satellite transmit end is configured to send a radio frequency signal of a first satellite operating frequency band, and the first satellite first receive end and the first satellite second receive end are configured to receive the radio frequency signal of the first satellite operating frequency band; and the third satellite transmit end is configured to send a radio frequency signal of a third satellite operating frequency band, and the third satellite receive end is configured to receive the radio frequency signal of the third satellite operating frequency band. For example, the first satellite communication antenna may be a high earth orbit satellite antenna. Therefore, in limited space, an electronic device may integrate two satellite communication antennas, and for the two satellites, a user may perform selection according to a requirement or the electronic device may perform selection based on a region in which the user is located, to implement diversified communication functions. For example, at one moment, only one of the first satellite communication antenna and the satellite short message service antenna (that is, the third satellite communication antenna) may be in an operating state.

According to yet another aspect of this application, an electronic device is provided, including at least one metal frame and any one of the foregoing antenna apparatuses. The metal frame includes the antenna structure in the antenna apparatus. The electronic device has same technical effects as the antenna apparatus provided in the foregoing embodiment. Details are not described herein again.

In an optional implementation, the metal frame includes a top frame, a first side frame, a bottom frame, and a second side frame that are sequentially connected end to end. The top frame includes the antenna structure. When a user stands and holds the electronic device, energy of an electromagnetic wave radiated by the antenna structure may be mainly concentrated on a side on which the top frame is located, that is, the energy is concentrated on a side that is of the electronic device and that faces the sky. This helps implement a satellite alignment operation of the electronic device, so that the user can use a satellite function in a larger angle range, thereby improving a degree of freedom for implementing the satellite function.

According to yet another aspect of this application, an electronic device is provided, including a hinge, two metal frames, and the foregoing antenna apparatus having the first satellite communication antenna and the second satellite communication antenna. The two metal frames are respectively a first metal frame and a second metal frame, and the first metal frame and the second metal frame are separately rotatably connected to the hinge. The first metal frame includes the first stub of the antenna structure, and the second metal frame includes the second stub of the antenna structure. The first stub and the second stub are symmetrically disposed with respect to the hinge. The first stub and the second stub are located at a same end of the hinge. The first satellite communication antenna includes the first stub and the second stub. In this way, a directivity pattern shown when the first satellite communication antenna sends a first satellite operating frequency band is omnidirectional with an antenna directivity pattern shown when the first satellite communication antenna receives the first satellite operating frequency band, thereby implementing better circular polarization coverage with a relatively large coverage area. In addition, radiation performance is consistent when the first satellite communication antenna sends or receives the first satellite operating frequency band. Therefore, when using the first satellite communication antenna for satellite communication, a user may less need to swing a mobile phone to change a satellite alignment angle, thereby making it easier to implement a satellite alignment function.

According to yet another aspect of this application, an electronic device is provided, including a metal frame and the foregoing antenna apparatus. The antenna apparatus may include the first satellite communication antenna and the satellite short message service antenna. The metal frame includes a top frame, a first side frame, a bottom frame, and a second side frame that are sequentially connected end to end. The top frame includes the first stub, the second stub, and at least a part of the fourth stub of the antenna structure, and the second stub is located between the fourth stub and the first stub. The electronic device has same technical effects as the antenna apparatus provided in the foregoing embodiment. Details are not described herein again.

### BRIEF DESCRIPTION OF DRAWINGS

FIG. 1 is a diagram of a structure of an electronic device according to an embodiment of this application;
FIG. 2 is a diagram of a structure of another electronic device according to an embodiment of this application;
FIG. 3 is a diagram of a structure of an antenna apparatus according to an embodiment of this application;
FIG. 4 is a diagram of a structure of another antenna apparatus according to an embodiment of this application;
FIG. 5 is a layout diagram of an antenna structure in a bar-type phone according to an embodiment of this application;
FIG. 6 is a layout diagram of an antenna structure in a foldable phone according to an embodiment of this application;
FIG. 7 is a diagram of a structure of still another antenna apparatus according to an embodiment of this application;
FIG. 8 is a diagram of a radiator feeding manner according to a conventional technology;
FIG. 9 is a diagram of a structure of yet another antenna apparatus according to an embodiment of this application;
FIG. 10 is a diagram of a structure of yet another antenna apparatus according to an embodiment of this application;
FIG. 11 is a diagram of a structure of yet another antenna apparatus according to an embodiment of this application;
FIG. 12 is a diagram of a structure of yet another antenna apparatus according to an embodiment of this application;
FIG. 13 is a layout diagram of another antenna structure in a bar-type phone according to an embodiment of this application;
FIG. 14 is a layout diagram of another antenna structure in a foldable phone according to an embodiment of this application;
(a) in FIG. 15, (b) in FIG. 15, and (c) in FIG. 15 are respectively an antenna directivity pattern of receiving and two antenna directivity patterns of sending of a first communication antenna;
FIG. 16 is a diagram of a structure of an antenna apparatus having two satellite communication antennas according to an embodiment of this application;
FIG. 17 is a diagram of a folded state of an electronic device according to an embodiment of this application;
FIG. 18 is a diagram of a structure of another antenna apparatus having two satellite communication antennas according to an embodiment of this application;
FIG. 19 is a diagram of a foldable phone having two satellite communication antennas according to an embodiment of this application;
FIG. 20 is a diagram of another foldable phone having two satellite communication antennas according to an embodiment of this application;
FIG. 21 is a diagram of still another foldable phone having two satellite communication antennas according to an embodiment of this application;
FIG. 22 is a diagram of still another foldable phone having two satellite communication antennas according to an embodiment of this application;
FIG. 23 is a diagram of a bar-type phone having two satellite communication antennas according to an embodiment of this application;
FIG. 24 is a diagram of a structure of an antenna apparatus having three satellite communication antennas and a plurality of ground network communication antennas according to an embodiment of this application;
FIG. 25 is a diagram of a foldable phone having three satellite communication antennas according to an embodiment of this application;
FIG. 26 is a diagram of another foldable phone having three satellite communication antennas according to an embodiment of this application;
FIG. 27 is a diagram of still another foldable phone having two satellite communication antennas according to an embodiment of this application;
FIG. 28 is a diagram of still another foldable phone having two satellite communication antennas according to an embodiment of this application;
FIG. 29 is a diagram of a bar-type phone having three satellite communication antennas according to an embodiment of this application;
FIG. 30 is a diagram of a structure of another antenna apparatus having three satellite communication antennas and a plurality of ground network communication antennas according to an embodiment of this application;
FIG. 31 is a diagram of a user interface according to an embodiment of this application;
FIG. 32 is a flowchart of a satellite antenna control method according to an embodiment of this application;
FIG. 33 is a diagram of a satellite antenna operating manner according to an embodiment of this application;
FIG. 34 is a diagram of another satellite antenna operating manner according to an embodiment of this application; and
FIG. 35 is a diagram of still another satellite antenna operating manner according to an embodiment of this application.

### Reference numerals:

01-electronic device; 10-housing; 20-display; 101-metal frame; 11-hinge; 10a-first housing; 10b-second housing; 101a-first metal frame; 101b-second metal frame; 30-antenna apparatus; 31-antenna structure; 311-first satellite communication antenna; 312-first ground network communication antenna; 3001-first stub; 3101-first electrical connection end; 32-communication chip; 300-clearance area; 40-tuning switch assembly; 41-first impedance matching network; 43-first radio frequency test base; 44-second radio frequency test base; 331-first power amplifier; 332-second power amplifier; 321-first satellite communication chip; 322-first ground network communication chip; 1011-top frame; 1012-first side frame; 1013-bottom frame; 1014-second side frame; 100-camera; 3002-second stub; 3201-second electrical connection end; 341-second satellite communication antenna; 3211-first sub-chip; 3222-second sub-chip; 11-hinge; 45-third radio frequency test base; 46-second impedance matching network; 3003-third stub; 3301-third electrical connection end; 351-third satellite communication antenna; 3004-fourth stub; 3401-fourth electrical connection end; 3233-third sub-chip; 361-satellite positioning antenna; 371-second ground network communication antenna; 381-third ground network communication antenna; 3005-fifth stub; 3501-fifth electrical connection end; 3006-sixth stub; and 3007-seventh stub.

### DESCRIPTION OF EMBODIMENTS

The following describes the technical solutions in embodiments of this application with reference to the accompanying drawings in embodiments of this application. It is clear that the described embodiments are merely some rather than all of embodiments of this application.

Terms such as "first" and "second" below are merely for convenience of description, and shall not be understood as an indication or implication of relative importance or implicit indication of a quantity of indicated technical features. Therefore, a feature limited by "first", "second", or the like may explicitly or implicitly include one or more features. In the descriptions of this application, unless otherwise specified, "a plurality of" means two or more than two.

In addition, in embodiments of this application, orientation terms such as ''upper'', ''lower'', "left", "right", "horizontal", and "vertical" may include but are not limited to definitions based on illustrated orientations in which components in the accompanying drawings are placed. It should be understood that these directional terms may be relative concepts, are used for relative description and clarification, and may vary accordingly depending on a change in the orientations in which the components in the accompanying drawings are placed in the accompanying drawings.

Limitations such as symmetric (for example, axisymmetric or centrosymmetric), parallel, perpendicular, orthogonal, and same (for example, a same length or a same width) mentioned in embodiments of this application are all for a current process level, and are not absolutely-strict definitions in mathematics. There may be a deviation of a predetermined angle between two components that are parallel or perpendicular to each other. In an embodiment, the predetermined angle may be an angle within a range of ±10°. For example, the deviation of the predetermined angle is ±5°.

In this application, unless otherwise expressly specified and limited, a term "connection" should be broadly understood. For example, "connection" may be a fixed mechanical connection, or may be a detachable mechanical connection or an integration. Alternatively, "connection" may be a direct connection, or may be an indirect connection via an intermediate medium.

In addition, unless otherwise specified and limited, a term "coupling" should be broadly understood. For example, "coupling" may be a direct electrical connection. For example, two components are in physical contact and electrically connected, which may also be understood as that different components in a line structure are electrically connected through a physical line that can perform electrical signal transmission, such as a printed circuit board (printed circuit board, PCB) copper foil or a conducting wire, to perform electrical signal transmission. Alternatively, "coupling" may be an indirect electrical connection between two components through an intermediate medium. Alternatively, "coupling" may be an electrical connection between two components in a space-free/non-contact manner. For example, the two components are electrically connected in a capacitive coupling manner, to perform electrical signal transmission.

It should be noted that, in the accompanying drawings of embodiments of this application, an assembly is represented by using a guide line with an arrow, and a component is represented by using only a guide line.

Embodiments of this application provide an electronic device. The electronic device may be used in various communication systems or communication protocols, for example, a global system for mobile communications (global system for mobile communications, GSM), a code division multiple access (code division multiple access, CDMA) system, wideband code division multiple access (wideband code division multiple access wireless, WCDMA), a general packet radio service (general packet radio service, GPRS), and long term evolution (long term evolution, LTE). The electronic device may have a display function. The electronic device may include a mobile phone (mobile phone), a tablet computer (pad), a television, an intelligent wearable product (for example, a smartwatch or a smart band), a virtual reality (virtual reality, VR) electronic device, an augmented reality (augmented reality, AR) electronic device, a positioning device, or the like. A specific form of the electronic device is not particularly limited in embodiments of this application.

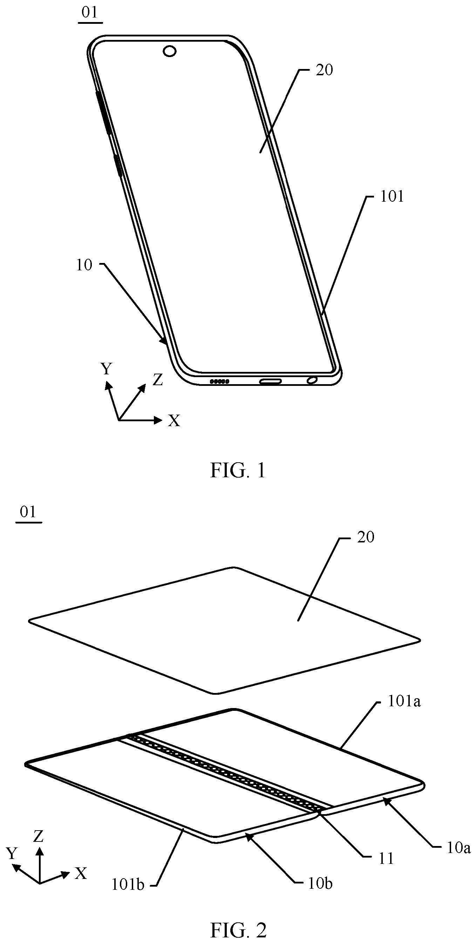

In some embodiments of this application, the electronic device may have a display function. For example, the electronic device 01 may be a bar-type phone shown in FIG. 1. The electronic device 01 may include a housing 10 and a display 20 connected to the housing 10. For example, the display 20 may be a self-emissive display, for example, an organic light emitting diode (organic light emitting diode, OLED) display, a micro (micro or mini) light emitting diode (light emitting diode, LED) display, or a quantum dot light emitting diode (quantum dot light emitting diode, QLED) display. Alternatively, for another example, the display 20 may be a liquid crystal display (liquid crystal display, LCD) that requires a backlight source.

For ease of description below, an XYZ coordinate axis is established in the accompanying drawings. An XY surface formed by an X direction and a Y direction may be parallel to a display surface (a surface for displaying an image) of the display 20. A Z direction may be perpendicular to the display surface of the display 20, that is, the Z direction may be a stacking direction of the housing 10 and the display 20. In some embodiments of this application, the housing 10 may include a metal frame 101 disposed around the display 20 and a bottom plate (not shown in FIG. 1) located on the back of the display 20.

Alternatively, in some other embodiments of this application, the electronic device 01 may be a foldable phone shown in FIG. 2. In this case, the electronic device 01 may include a display 20, a hinge 11, and two housings that are located on two sides of the hinge and that are respectively a first housing 10a and a second housing 10b. A type of the display 20 is the same as that described above, and details are not described herein again. The display 20 may be connected to the first housing 10a and the second housing 10b. The first housing 10a and the second housing 10b may be rotatably connected through the hinge 11, to support and fold the display 20, thereby implementing unfolding and folding of the electronic device 01. In some embodiments of this application, the first housing 10a may include a first metal frame 101a disposed around a part of the display 20, and the second housing 10b may include a second metal frame 101b disposed around the other part of the display 20.

For the foldable phone, the X direction may be a direction from the first housing 10a to the second housing 10b, or a direction from the second housing 10b to the first housing 10a; and the Y direction may be parallel to a rotation axis of the first housing 10a and the second housing 10b.

The foregoing descriptions are provided by using an example in which the electronic device 01 includes two housings if the electronic device 01 is a foldable phone. In this case, the electronic device 01 may be referred to as a two-fold phone. A quantity of housings in the electronic device 01 is not limited in this application. The electronic device 01 may be a three-fold or more-fold phone. For ease of description, when the electronic device 01 is a foldable phone, an example in which the electronic device 01 is the foregoing two-fold phone is used below for description.

In addition, the foregoing descriptions are provided by using an example in which the electronic device has a display function. In some other embodiments of this application, the electronic device may not have a display function. This is not limited in this application. For ease of description, an example in which the electronic device has a display function is used below for description.

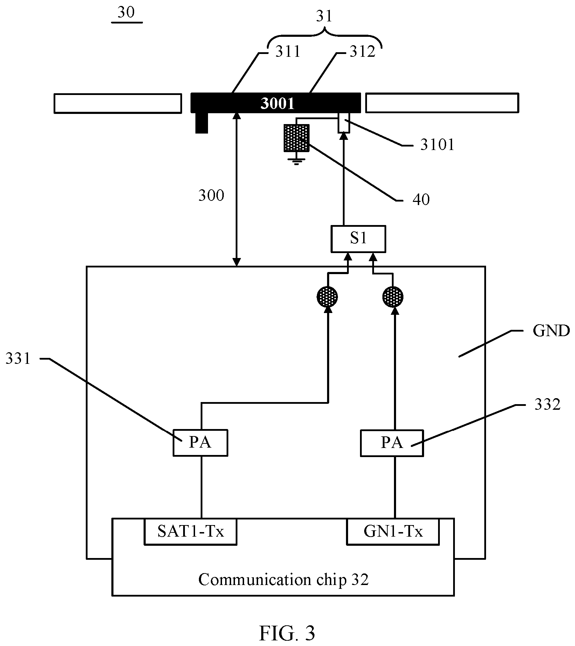

On this basis, to enable the foregoing electronic device to have a communication function, the electronic device may include an antenna apparatus 30 shown in FIG. 3. The antenna apparatus 30 may include an antenna structure 31, a communication chip 32, and a first gating switch S1. The antenna structure 31 may include a plurality of antennas, and the antennas are apparatuses configured to receive (receive, Rx) or send (transmit, Tx) electromagnetic wave radiation. In some cases, "antenna" is narrowly understood as a radiator, and the antenna converts guided wave energy from a transmitter into a radio wave, or converts a radio wave into guided wave energy, to radiate and receive a radio wave. Modulated high-frequency current energy (or guided wave energy) generated by the transmitter is transmitted to a transmit radiator through a feeder, and the radiator converts the energy into specific polarized electromagnetic wave energy and radiates the energy in a required direction. A receive radiator converts specific polarized electromagnetic wave energy from a specific direction of space into modulated high-frequency current energy, and transmits the energy to a receiver input end through a feeder.

In some embodiments of this application, still as shown in FIG. 3, the antenna structure 31 may include a first satellite communication antenna 311 and a first ground network communication antenna 312. The first satellite communication antenna 311 may be configured to receive or send a radio frequency signal of a first satellite operating frequency band. For example, the first satellite communication antenna 311 may be a high earth orbit satellite communication antenna, for example, an orbital height may be about 35786 kilometers. In this case, when the first satellite communication antenna 311 is configured to make a voice call, receive and send a short message service message (or a short packet), or perform low-speed data transmission, the first satellite operating frequency band may include an uplink frequency band (for example, 1980/MHz to 2010/MHz) and a downlink frequency band (for example, 2170/MHz to 2200/MHz).

Alternatively, for another example, when the first satellite communication antenna 311 is the foregoing high earth orbit satellite communication antenna, the first satellite communication antenna 311 may be further configured only to receive and send a short message service message. In this case, the first satellite operating frequency band may include an uplink frequency band (for example, 1610/MHz to 1626/MHz) and a downlink frequency band (for example, 2483/MHz to 2500/MHz). Alternatively, for another example, the first satellite communication antenna 311 may be a low earth orbit satellite communication antenna, and an orbital height may range from 500 kilometers to 2000 kilometers, for example, 1175 kilometers. In this case, when the first satellite communication antenna 311 is configured to make a voice call, receive and send a short message service message, or perform low-speed data transmission, the first satellite operating frequency band may include an uplink frequency band (for example, 1668/MHz to 1675/MHz) and a downlink frequency band (for example, 1518/MHz to 1525/MHz).

In addition, the first ground network communication antenna 312 shown in FIG. 3 is configured to receive or send a radio frequency signal of a first ground network operating frequency band. For example, the first ground network communication antenna 312 may be a cellular antenna, and the first ground network operating frequency band may be a cellular communication frequency band. The cellular communication frequency band may include a medium and high frequency band (middle high band, MHB), for example, 1800/MHz to 2700/MHz, and a 5G new radio (new radio, NR) frequency band. Alternatively, for another example, the ground network communication antenna 312 may be a wireless fidelity (wireless fidelity, Wi-Fi) antenna, and the first ground network operating frequency band may be a Wi-Fi communication frequency band, for example, a Wi-Fi 2.4G frequency band (2400/MHz to 2483.5/MHz), or a Wi-Fi 5G frequency band (5150/MHz to 5825/MHz).

For ease of description, in the following, for example, the first satellite communication antenna 311 is a high earth orbit antenna, the first satellite communication antenna 311 is configured to make a voice call, receive and send a short message service message (or a short packet), or perform low-speed data transmission, and the first satellite operating frequency band may include an uplink frequency band (for example, 1980/MHz to 2010/MHz) and a downlink frequency band (for example, 2170/MHz to 2200/MHz); and the first ground network communication antenna 312 may be a cellular antenna, and the first ground network operating frequency band may be a cellular communication frequency band.

In addition, still as shown in FIG. 3, the first satellite communication antenna 311 may include a first stub 3001, the first stub 3001 has a first electrical connection end 3101, and the first ground network communication antenna 312 may include the first stub 3001. Therefore, both the first satellite communication antenna 311 and the first ground network communication antenna 312 include the first stub 3001, so that the first satellite communication antenna 311 and the first ground network communication antenna 312 can share the first stub 3001.

On this basis, still as shown in FIG. 3, the communication chip 32 may have a first satellite transmit end SAT1-Tx and a first ground network transmit end GN1-Tx. The first satellite transmit end SAT1-Tx may be configured to send the radio frequency signal of the first satellite operating frequency band (for example, the uplink frequency band 1980/MHz to 2010/MHz). The first ground network transmit end GN1-Tx is configured to send the radio frequency signal of the first ground network operating frequency band (for example, the cellular communication frequency band). For example, when the first ground network operating frequency band is the cellular communication frequency band, the first ground network transmit end GN1-Tx may further perform share with a first ground network receive end GN1-Rx, to perform transmission of serial cellular transmit or receive signals.

For example, the communication chip 32 may include a baseband chip; or the communication chip 32 may further include a part of a radio frequency (radio frequency, RF) chip in addition to a baseband chip. The baseband chip may process a digital signal, that is, a low frequency part of the signal. For example, the baseband chip may include a digital signal processor (digital signal processor, DSP), a modem (modem), or a codec. The baseband may implement functions such as digital signal processing, modulation and demodulation, and channel encoding and decoding. In addition, the radio frequency chip may process a radio frequency signal, that is, a high frequency part of the signal. The radio frequency chip may include a radio frequency amplifier, a frequency mixer, a filter, a frequency synthesizer, or the like. The radio frequency chip is configured to generate, amplify, modulate, and demodulate a radio frequency signal. A digitalanalog converter configured to perform conversion between a digital signal and an analog signal may be disposed between the baseband chip and the radio frequency chip.

In addition, still as shown in FIG. 3, the first gating switch S1 is coupled between the first satellite transmit end SAT1-Tx and the first electrical connection end 3101. In addition, the first gating switch S1 is further coupled between the first ground network transmit end GN1-Tx and the first electrical connection end 3101. The first gating switch S1 may be configured to connect the first satellite transmit end SAT1-Tx or the first ground network transmit end GN1-Tx to the first electrical connection end 3101. For example, the first gating switch S1 may be a single-pole multi-throw (single-pole multi-throw, SPMT) switch, for example, a single-pole four-throw (single-pole four-throw, SP4T) switch; or is a combination of a plurality of (for example, four) single-pole single-throw (single-pole single-throw, SPST) switches. This is not limited in this application.

In some embodiments of this application, the antenna apparatus 30 may further include a first power amplifier (power amplifier, PA) 331 and a second power amplifier 332 shown in FIG. 3. The first power amplifier 331 is coupled to the first satellite transmit end SAT1-Tx, and the first gating switch S1 is coupled between the first power amplifier 331 and the first electrical connection end 3101. In this case, the first satellite transmit end SAT1-Tx may be coupled to the first electrical connection end 3101 through the first power amplifier 331 and the first gating switch S1. The first power amplifier 331 may perform power amplification on a signal from the first satellite transmit end SAT1-Tx.

In addition, the second power amplifier 332 is coupled to the first ground network transmit end GN1-Tx, and the first gating switch S1 is further coupled between the second power amplifier 332 and the first electrical connection end 3101. In this case, the first ground network transmit end GN1-Tx may be coupled to the first electrical connection end 3101 through the second power amplifier 332 and the first gating switch S1. The second power amplifier 332 may perform power amplification on a signal from the first ground network transmit end GN1-Tx. For example, the first power amplifier 331 and the second power amplifier 332 may belong to a part of the foregoing radio frequency chip. Alternatively, for another example, the first power amplifier 331 and the second power amplifier 332 may be independent of the radio frequency chip. This is not limited in this application.

Efficiency of the first power amplifier 331 is different from efficiency of the second power amplifier 332. Efficiency of a power amplifier may be a ratio of output power to input power of the power amplifier, and the efficiency of the power amplifier may be used to measure an energy conversion rate from a power source to a load. Higher efficiency of the power amplifier indicates that an output power requirement is met and indicates smaller input power of the power amplifier, that is, indicates smaller loss of energy transmitted from the power source to the load, and vice versa.

For example, when the first satellite communication antenna 311 is a high earth orbit antenna, the first satellite operating frequency band may include an uplink frequency band (for example, 1980/MHz to 2010/MHz), the first ground network communication antenna 312 is a cellular antenna, and the first ground network operating frequency band may be a cellular communication frequency band, the efficiency of the first power amplifier 331 may be greater than the efficiency of the second power amplifier 332. For example, maximum efficiency of the first power amplifier 331 may reach about 30 dB, and maximum efficiency of the second power amplifier 332 may reach about 28 dB.

In this way, the first satellite transmit end SAT1-Tx (configured to send the radio frequency signal of the first satellite operating frequency band) and the first ground network transmit end GN1-Tx (configured to send the first ground network operating frequency band) are respectively coupled to the first power amplifier 331 and the second power amplifier 332 that have different efficiency, to make both the first power amplifier 331 and the second power amplifier 332 operate with maximum efficiency, so that output power requirements of the first power amplifier 331 and the second power amplifier 332 can be met, and respective input power of the first power amplifier 331 and the second power amplifier 332 can be reduced, thereby reducing energy loss. The foregoing descriptions are provided by using an example in which the efficiency of the first power amplifier 331 is greater than the efficiency of the second power amplifier 332. In some other embodiments, the efficiency of the first power amplifier 331 may be less than the efficiency of the second power amplifier 332.

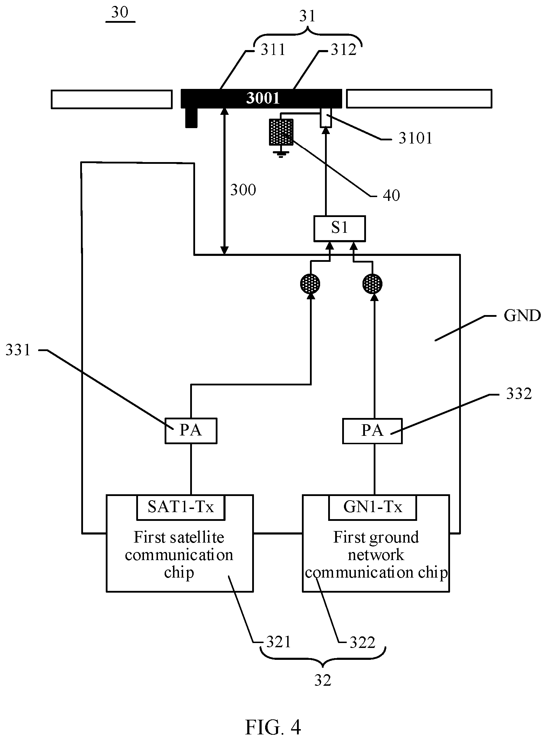

On this basis, the antenna apparatus 30 has a clearance area 300 shown in FIG. 3 or FIG. 4, and the first gating switch S1 may be located in the clearance area 300. The clearance area 300 may be an area in which a gap between a ground plane GND and the antenna structure 31 of the electronic device is located. The following describes a manner of disposing the clearance area 300 by using an example.

In some embodiments, the electronic device may include a circuit board (printed circuit board, PCB). The first gating switch S1, the first power amplifier 331, the second power amplifier 332, and the communication chip 32 may be disposed on the circuit board, and are electrically connected to the circuit board. One metal layer in the circuit board may be used as the ground plane GND. The ground plane GND may be a rectangle shown in FIG. 3, or the ground plane GND may be in a shape of a hollow-out structure, for example, an L shape shown in FIG. 4 or a U shape. A hollow-out part of the ground plane GND may be filled with a dielectric layer in the circuit board, so that a position of the dielectric layer can support the first gating switch S1.

In conclusion, the antenna apparatus 30 provided in this embodiment of this application includes the antenna structure 31 shown in FIG. 3. The communication chip 32 in the antenna structure 31 may have different signal transmit ends, for example, the first satellite transmit end SAT1-Tx and the first ground network transmit end GN1-Tx. In this case, the communication chip 32 may send the radio frequency signal of the first satellite operating frequency band (for example, the uplink frequency band 1980/MHz to 2010/MHz) through the first satellite transmit end SAT1-Tx, or may send the radio frequency signal of the first ground network operating frequency band (for example, the cellular communication frequency band) through the first ground network transmit end GN1-Tx. In this way, the communication chip 32 is capable of sending radio frequency signals of two different operating frequency bands. Therefore, two independent chips configured to send the radio frequency signals of the different operating frequency bands do not need to be disposed, so that the communication chip 32 can have a smaller size than the two independent chips, thereby helping improve space utilization of the antenna apparatus 30.

On this basis, still as shown in FIG. 3, to meet a system energy loss requirement, power amplification required by different signal transmit ends of the communication chip 32 such as the first satellite transmit end SAT1-Tx and the first ground network transmit end GN1-Tx to respectively send radio frequency signals may have different efficiency. In this case, compared with a solution in which the first satellite transmit end SAT1-Tx and the first ground network transmit end GN1-Tx share a same power amplifier, in this embodiment of this application, the first satellite transmit end SAT1-Tx and the first ground network transmit end GN1-Tx may be respectively connected to the first power amplifier 331 and the second power amplifier 332 that have different efficiency, to make both the first power amplifier 331 and the second power amplifier 332 operate with maximum efficiency, so that output power requirements of the first power amplifier 331 and the second power amplifier 332 can be met, and respective input power of the first power amplifier 331 and the second power amplifier 332 can be reduced, thereby meeting a system energy loss requirement.

In addition, to further improve space utilization of the antenna apparatus 30, still as shown in FIG. 3, the first satellite communication antenna 311 and the first ground network communication antenna 312 include a same stub, that is, the first stub 3001. The first stub 3001 has the first electrical connection end 3101. To enable one of the first satellite communication antenna 311 and the first ground network communication antenna 312 that share a stub to independently operate at one moment, the communication chip 32 may send a control signal to the first gating switch S1 to control the first gating switch S1 to connect the first satellite transmit end SAT1-Tx to the first electrical connection end 3101. Therefore, the first satellite transmit end SAT1-Tx, the first power amplifier 331, the first gating switch S1, and the first electrical connection end 3101 may form a communication link of to-be-sent data of the first satellite communication antenna 311, so that the radio frequency signal of the first satellite operating frequency band (for example, the uplink frequency band 1980/MHz to 2010/MHz) that is sent by the first satellite transmit end SAT1-Tx is power-amplified by the first power amplifier 331 and then is transmitted to the first electrical connection end 3101, to feed the first stub 3001, thereby making the first stub 3001 serve as the first satellite communication antenna 311 to send the radio frequency signal of the first satellite operating frequency band.

Alternatively, still as shown in FIG. 3, the communication chip 32 may send a control signal to the first gating switch S1 to control the first gating switch S1 to connect the first ground network transmit end GN1-Tx to the first electrical connection end 3101. Therefore, the first ground network transmit end GN1-Tx, the second power amplifier 332, the first gating switch S1, and the first electrical connection end 3101 may form a communication link of to-be-sent data of the first ground network communication antenna 312, so that the radio frequency signal of the first ground network operating frequency band (for example, the cellular communication frequency band) that is sent by the first ground network transmit end GN1-Tx is power-amplified by the second power amplifier 332 and then is transmitted to the first electrical connection end 3101, to feed the first stub 3001, thereby making the first stub 3001 serve as the first ground network communication antenna 312 to send the radio frequency signal of the first ground network operating frequency band.

Based on this, the first satellite communication antenna 311 and the first ground network communication antenna 312 may share a same stub (that is, the first stub 3001), and both feed ends are the first electrical connection end 3101 of the first stub 3001. In this way, different stubs and different feed ends do not need to be independently disposed for the first satellite communication antenna 311 and the first ground network communication antenna 312, so that a quantity of stubs and a quantity of feed ends in the antenna apparatus 30 can be reduced, to save internal space of the electronic device having the antenna apparatus 30 and improve space utilization of the antenna apparatus 30, thereby implementing diversified communication functions in limited architecture space. It can be learned from the foregoing descriptions that the antenna apparatus 30 provided in this embodiment of this application can improve space utilization of the antenna apparatus 30 on the basis that a system energy loss requirement is met.

In addition, the first gating switch S1 located in the clearance area 300 has different conduction states, so that the first satellite communication antenna 311 and the first ground network communication antenna 312 may not be in an operating state (for example, a signal transmission state) at the same time. For example, when the first gating switch S1 connects the first power amplifier 331 to the first electrical connection end 3101, the first satellite communication antenna 311 is in an operating state. In this case, the second power amplifier 332 and the first electrical connection end 3101 are in a disconnected state, and the first ground network communication antenna 312 is in a non-operating state. Similarly, when the first gating switch S1 connects the second power amplifier 332 to the first electrical connection end 3101, the first ground network communication antenna 312 is in an operating state. In this case, the first satellite communication antenna 311 is in a non-operating state. In this way, a probability of mutual interference between the communication link of the to-be-sent data of the first ground network communication antenna 312 and the communication link of the to-be-sent data of the first ground network communication antenna 312 can be reduced, thereby reducing signal loss.

In some embodiments of this application, "electrical connection end" may be a segment of radiator on an antenna stub, and "end" cannot be narrowly understood as necessarily an endpoint or an end part that is physically disconnected from another antenna stub, or may be considered as a point or a segment on a continuous antenna stub. In an embodiment, "end" may include a coupling area coupled to another conductive structure on a stub. For example, when the antenna stub serves as a main feed radiator, and the foregoing electrical connection end is coupled to a feed circuit, the electrical connection end may be referred to as a feed end. Alternatively, when the antenna stub serves as a parasitic stub, the antenna stub may be capacitively or inductively grounded, and the electrical connection end may also be referred to as a ground end.

In addition, still as shown in FIG. 3, the antenna apparatus 30 may further include a tuning switch assembly 40 coupled to the electrical connection end 3101, and the tuning switch assembly 40 may include a tuning device and a switch coupled to the tuning device. The tuning device may include at least one of a capacitor and an inductor. By using a control switch, different tuning devices are selected to be coupled to the electrical connection end 3101, so that an antenna aperture of the first stub 3001 can be adjusted according to a requirement. A structure of the tuning switch assembly 40 is not limited in embodiments of this application.

The capacitor in embodiments of this application may be understood as a lumped capacitor and/or a distributed capacitor. The lumped capacitor is a capacitive component, for example, a capacitive element. The distributed capacitor (or a distributed type capacitor) is an equivalent capacitor formed by separating two conductive members by a specific gap. The inductor may be understood as a lumped inductor and/or a distributed inductor. The lumped inductor is an inductive component, for example, an inductive element. The distributed inductor (or a distributed type inductor) is an equivalent inductor formed by a conductive member of a specific length, for example, an equivalent inductor formed by bending or rotating a conductor.

As shown in FIG. 4, in some embodiments of this application, the communication chip 32 may include a first satellite communication chip 321 and a first ground network communication chip 322. The first satellite communication chip 321 may have the foregoing first satellite transmit end SAT1-Tx, and the first ground network communication chip 322 may have the foregoing first ground network transmit end GN1-Tx. For example, the first satellite communication chip 321 and the first ground network communication chip 322 may be respectively independent packaged chips. Alternatively, for another example, the first satellite communication chip 321 and the first ground network communication chip 322 may be independent bare chips, and are packaged in a same chip package. This is not limited in this application.

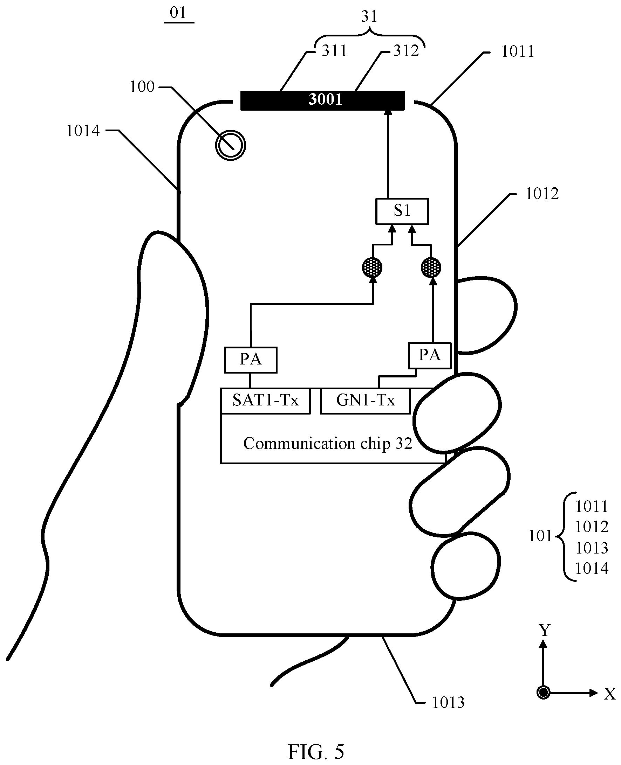

Based on this, to improve space utilization of the electronic device, when the electronic device 01 is a bar-type phone shown in FIG. 5, the metal frame 101 in the housing of the electronic device 01 may include at least a part of the antenna structure 31 (as shown in FIG. 3). For example, a part of the metal frame 101 may be reused as the first stub 3001 in the antenna structure 31. In some embodiments of this application, still as shown in FIG. 5, the metal frame 101 may include a top frame 1011, a first side frame 1012, a bottom frame 1013, and a second side frame 1014 that are sequentially connected end to end. The top frame 1011 and the bottom frame 1013 may be disposed oppositely, and the first side frame 1012 and the second side frame 1014 may be disposed oppositely. The top frame 1011 and the bottom frame 1013 may mean that when a user stands and holds the electronic device 01 shown in FIG. 5, the top frame 1011 is located above and may face the sky, and the bottom frame 1013 is located below and faces the ground. Alternatively, when the electronic device 01 includes a camera 100, the camera 100 is usually located in an upper part of the electronic device 01, and the top frame 1011 is disposed closer to the camera 100 than the bottom frame 1013.

Based on this, it can be learned from the foregoing descriptions that the antenna structure 31 shown in FIG. 5 includes the first satellite communication antenna 311 configured to send and receive a radio frequency signal. Therefore, the top frame 1011 may include the first satellite communication antenna 311 in the antenna structure, that is, the top frame 1011 may include the first stub 3001. In this way, the first satellite communication antenna 311 is located at the top of the electronic device 01. When the user holds the electronic device 01 shown in FIG. 5, energy of an electromagnetic wave radiated by the first satellite communication antenna 311 may be mainly concentrated on a side of the top frame 1011, that is, the energy is concentrated on a side that is of the electronic device 01 and that faces the sky. This helps implement a satellite alignment operation of the electronic device 01, so that the user can use a satellite function within a larger angle range, thereby improving a degree of freedom for implementing the satellite function.

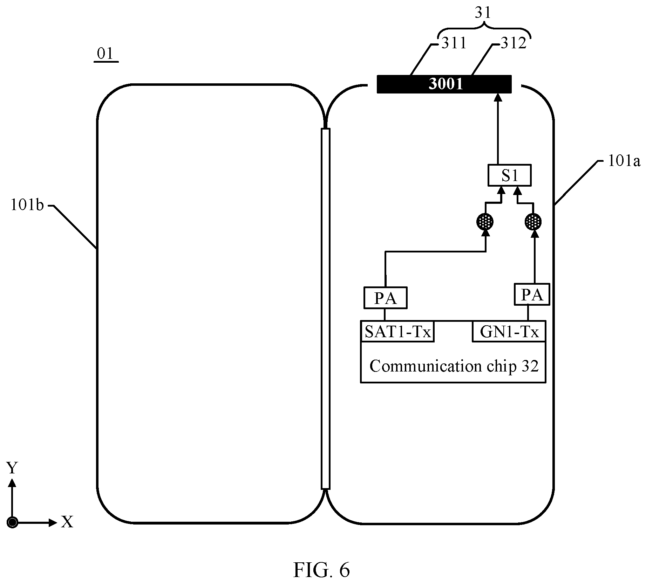

Alternatively, when the electronic device 01 is a foldable phone shown in FIG. 6, at least one of the first metal frame 101a and the second metal frame 101b, for example, the first metal frame 101a, may include at least a part of the antenna structure 31 (as shown in FIG. 3). For example, a part of the first metal frame 101a may be reused as the first stub 3001 in the antenna structure 31. Similarly, a part that is of the first metal frame 101a or the second metal frame 101b and that is close to a camera may be reused as the first stub 3001.

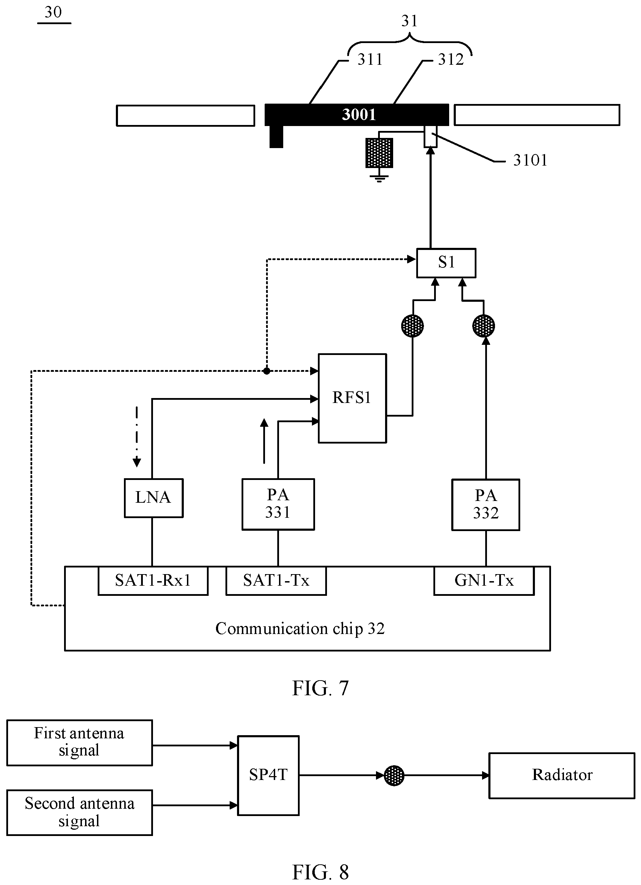

On this basis, as shown in FIG. 7, the communication chip 32 may further include a first satellite first receive end SAT1-Rx1, and the first satellite first receive end SAT1-Rx1 may be configured to receive the radio frequency signal of the first satellite operating frequency band (for example, the downlink frequency band 2170/MHz to 2200/MHz). In addition, the antenna apparatus 30 may further include a first radio frequency switch RFS1, and the first radio frequency switch RFS1 is coupled between the first satellite transmit end SAT1-Tx and the first gating switch S1. For example, when the antenna apparatus 30 includes the first power amplifier 331, the first radio frequency switch RFS1 may be coupled between the first power amplifier 331 and the first gating switch S1.

In addition, the first radio frequency switch RFS1 is further coupled between the first satellite first receive end SAT1-Rx1 and the first gating switch S1. For example, the antenna apparatus 30 may further include a low noise amplifier (low noise amplifier, LNA), and the LNA may be coupled between the first satellite first receive end SAT1-Rx1 and the first radio frequency switch RFS1, so that the first radio frequency switch RFS1 is coupled to the first satellite first receive end SAT1-Rx1 through the LNA. The LNA may be integrated into the foregoing radio frequency chip, or may be independent of the radio frequency chip. This is not limited in this application.

In this case, still as shown in FIG. 7, the first radio frequency switch RFS1 may be configured to connect the first satellite transmit end SAT1-Tx or the first satellite first receive end SAT1-Rx1 to the first gating switch S1. When the antenna apparatus 30 has the LNA, the first radio frequency switch RFS1 may be configured to connect the first power amplifier 331 or the LNA to the first gating switch S1.

In this way, the communication chip 32 may send a control signal to the first radio frequency switch RFS1 (which is represented by a dashed line arrow in FIG. 7) to control the first radio frequency switch RFS1 to connect the first power amplifier 331 to the first gating switch S1, so that a communication link (including the first satellite transmit end SAT1-Tx, the first power amplifier 331, and the first radio frequency switch RFS1) of to-be-sent data of the first satellite communication antenna 311 is connected to the first gating switch S1. Based on this, when the communication chip 32 sends a control signal to the first gating switch S1 (which is represented by a dashed line arrow in FIG. 7) to control the first gating switch S1 to connect the first radio frequency switch RFS1 to the first electrical connection end 3101, the radio frequency signal of the first satellite operating frequency band that is sent by the communication chip 32 through the first satellite transmit end SAT1-Tx may be transmitted to the first electrical connection end 3101 upward along a direction of a solid line arrow in FIG. 7 through the communication link of the to-be-sent data, to feed the first stub 3001, thereby making the first stub 3001 serve as the first satellite communication antenna 311 to send the radio frequency signal of the first satellite operating frequency band.

Alternatively, still as shown in FIG. 7, the communication chip 32 may send a control signal to the first radio frequency switch RFS1 to control the first radio frequency switch RFS1 to connect the LNA to the first gating switch S1, so that a communication link (including the first satellite first receive end SAT1-Rx1, the LNA, and the first radio frequency switch RFS1) of to-be-received data of the first satellite communication antenna 311 is connected to the first gating switch S1. Based on this, when the communication chip 32 sends a control signal to the first gating switch S1 to control the first gating switch S1 to connect the first radio frequency switch RFS1 to the first electrical connection end 3101, the first stub 3001 may serve as at least a part of the first satellite communication antenna 311 to receive the radio frequency signal of the first satellite operating frequency band, and transmit the signal to the first satellite first receive end SAT1-Rx1 downward along a direction of a dot-line arrow in FIG. 7 through the communication link of the to-be-received data, so that the communication chip 32 performs data processing.

It can be learned from the foregoing descriptions that, still as shown in FIG. 7, the communication chip 32 may select, by controlling different paths in the first gating switch S1, the first stub 3001 as at least a part of the first satellite communication antenna 311 or as at least a part of the first ground network communication antenna 312 to receive and transmit a signal. In addition, when the first gating switch S1 connects the first electrical connection end 3101 to the first radio frequency switch RFS1, the communication chip 32 may select, by controlling different paths in the first radio frequency switch RFS1, the first stub 3001 as at least a part of the first satellite communication antenna 311 to send the radio frequency signal of the first satellite operating frequency band or as at least a part of the first satellite communication antenna 311 to receive the radio frequency signal of the first satellite operating frequency band.

For example, the first radio frequency switch RFS1 may be an SPMT (for example, an SP4T) or a combination of a plurality of (for example, four) SPST switches. This is not limited in this application. The first radio frequency switch RFS1 serves as a radio frequency switch, a performance indicator of the first radio frequency switch RFS1 may include insertion loss, isolation between paths, power handling energy under different reflection coefficients, and the like, and the first radio frequency switch RFS1 generates relatively large signal loss. It can be learned from FIG. 7 that, when the first gating switch S1 selects the first stub 3001 as at least a part of the first ground network communication antenna 312 to receive and send a signal, the foregoing radio frequency switch does not need to be disposed in a signal path between the first stub 3001 and the first ground network transmit end GN1-Tx, so that signal loss in the path can be reduced. In addition, a performance indicator of the first gating switch S1 located in the clearance area 300 (as shown in FIG. 3) may include voltage and current. Therefore, signal loss can be further reduced by adjusting voltage or current at two ends of the first gating switch S1.

In comparison, in a conventional technology, as shown in FIG. 8, two different signals, namely, a first antenna signal (for example, the radio frequency signal of the first satellite operating frequency band) and a second antenna signal (for example, a cellular signal), need to be transmitted to a same radiator through one connection selection in a radio frequency switch (SP4T). In this case, both a communication link of the first antenna signal and a communication link of the second antenna signal need to pass through the radio frequency switch (SP4T), causing relatively large signal loss of the foregoing two antenna signals under impact of the radio frequency switch (SP4T).

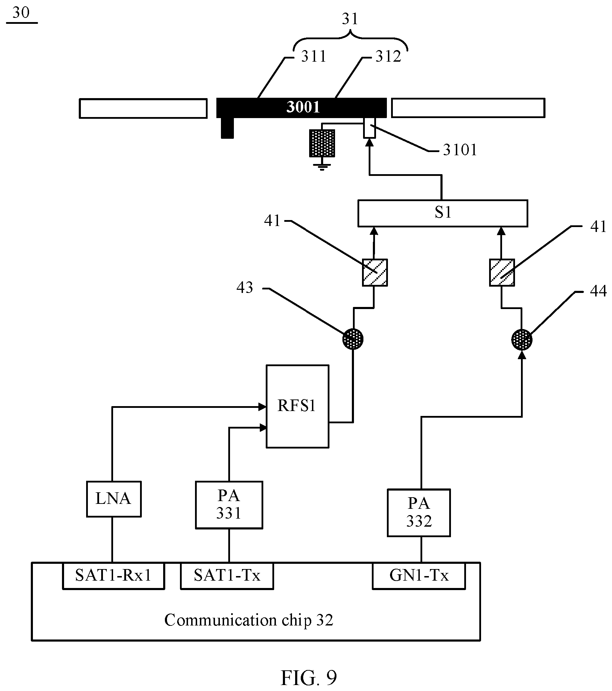

In addition, as shown in FIG. 9, the antenna apparatus 30 in this embodiment of this application may further include a first impedance matching network 41, a first radio frequency test base (switch) 43, and a second radio frequency test base 44. The first impedance matching network 41 may perform impedance matching on a communication link of at least one of the first satellite communication antenna 311 or the first ground network communication antenna 312. The first radio frequency test base 43 may be connected to a test instrument, to test and adjust a related parameter for impedance matching on the communication link of the first satellite communication antenna 311. For example, a related parameter and a structure of the first impedance matching network 41 are adjusted by using a return loss curve or a Smith chart (Smith chart), to achieve impedance matching effect. Similarly, the second radio frequency test base 44 may be connected to a test instrument, to test and adjust a related parameter for impedance matching on the communication link of the first ground network communication antenna 312.

Antenna impedance is usually a ratio of voltage to current at an antenna input end. The antenna impedance is a measure of resistance of an antenna to an electrical signal. A main purpose of antenna impedance matching is to implement matching between an antenna and a transmission line. When the antenna matches the transmission line, power transmitted from a transmitter to the antenna or from the antenna to a receiver is maximum. In this case, no reflected wave appears on the transmission line, a reflection coefficient is equal to 0, and a standing wave coefficient is equal to 1. A degree of matching between the antenna and the transmission line is measured by a reflection coefficient or a standing wave ratio at the antenna input end. For a transmit antenna, if matching is poor, radiant power of the antenna decreases, loss on the transmission line increases, power capacity of the transmission line also decreases, and severely even "pulling" on a transmitter frequency occurs, that is, an oscillation frequency changes.

The following describes a manner of disposing the first impedance matching network 41 by using an example. In some embodiments of this application, as shown in FIG. 9, the first radio frequency test base 43 may be coupled between the first gating switch S1 and the first satellite transmit end SAT1-Tx. When the antenna apparatus 30 has the first radio frequency switch RFS1, the first radio frequency test base 43 may be coupled between the first gating switch S1 and the first radio frequency switch RFS1. The second radio frequency test base 44 may be coupled between the first gating switch S1 and the first ground network transmit end GN1-Tx. For example, when the antenna apparatus 30 includes the first power amplifier 331, the second radio frequency test base 44 may be coupled between the first gating switch S1 and the first power amplifier 331. In addition, still as shown in FIG. 9, the first impedance matching network 41 may be coupled between the first gating switch S1 and at least one of the first radio frequency test base 43 or the second radio frequency test base 44. FIG. 9 is described by using an example in which the first impedance matching network 41 is coupled to both the first radio frequency test base 43 and the second radio frequency test base 44.

In this case, when the first gating switch S1 connects the first electrical connection end 3101 to the first radio frequency switch RFS1, the first gating switch S1 disconnects the first electrical connection end 3101 from the first ground network transmit end GN1-Tx, so that a signal from the first ground network transmit end GN1-Tx does not affect a communication link (including the first satellite transmit end SAT1-Tx, the first power amplifier 331, the first radio frequency switch RFS1, the first impedance matching network 41, the first gating switch S1, and the first electrical connection end 3101) of the first satellite communication antenna 311, and effect of impedance matching on the communication link of the first satellite communication antenna 311 matches the structure and the related parameter of the first impedance matching network 41, thereby improving radiant power of the first satellite communication antenna 311 and reducing signal loss.

Similarly, when the first gating switch S1 connects the first electrical connection end 3101 to the first ground network transmit end GN1-Tx, the first gating switch S1 disconnects the first electrical connection end 3101 from the first satellite transmit end SAT1-Tx, so that a signal from the first satellite transmit end SAT1-Tx does not affect a communication link (including the first ground network transmit end GN1-Tx, the second power amplifier 332, the first impedance matching network 41, the first gating switch S1, and the first electrical connection end 3101) of the first ground network communication antenna 312, and effect of impedance matching on the communication link of the first ground network communication antenna 312 matches the structure and the related parameter of the first impedance matching network 41, thereby improving radiant power of the first ground network communication antenna 312 and reducing signal loss. In this way, disposition of the first gating switch S1 can improve isolation between the communication link of the first satellite communication antenna 311 and the communication link of the first ground network communication antenna 312, thereby reducing signal loss.

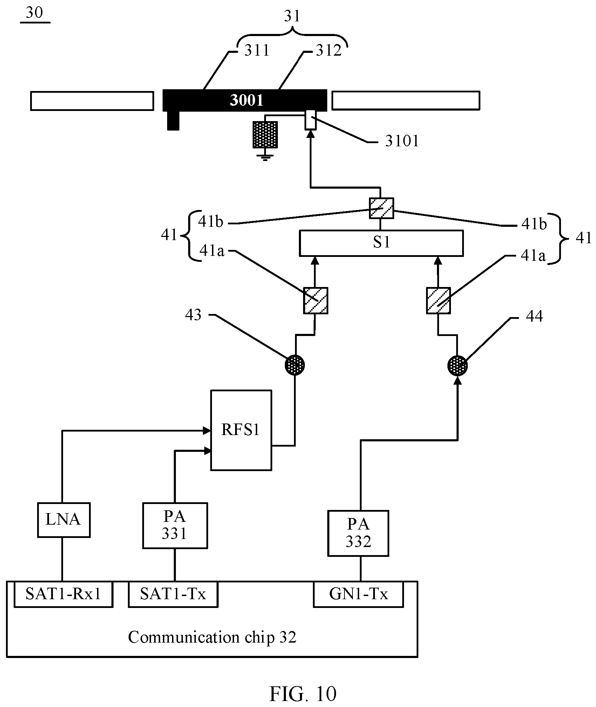

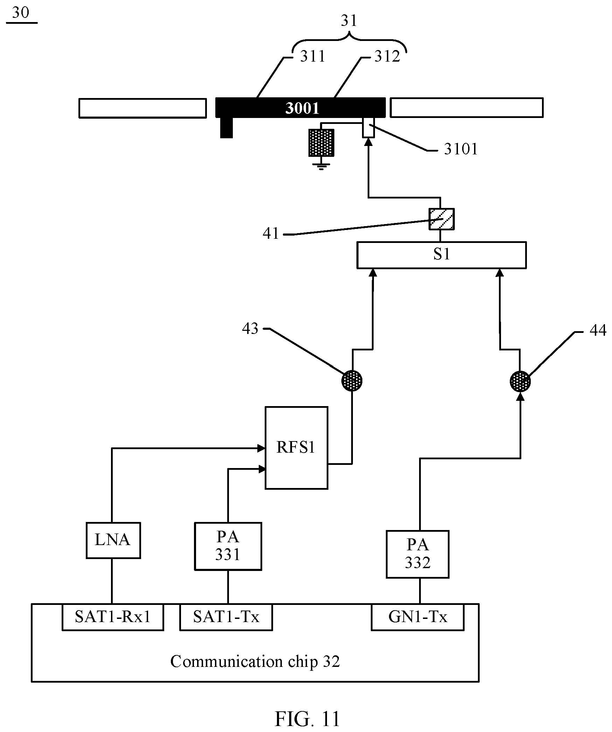

The foregoing descriptions are provided by using an example in which the first impedance matching network 41 may be coupled to the first gating switch S1 and at least one of the first radio frequency test base 43 or the second radio frequency test base 44. In some other embodiments of this application, as shown in FIG. 10, the first impedance matching network 41 may include two parts: a first part 41a and a second part 41b. The first part 41a of the first impedance matching network may be coupled between the first gating switch S1 and at least one of the first radio frequency test base 43 or the second radio frequency test base 44, and the second part 41b of the first impedance matching network may be coupled between the first gating switch S1 and the first electrical connection end 3101. Alternatively, for another example, as shown in FIG. 11, the first impedance matching network 41 is coupled between the first gating switch S1 and the first electrical connection end 3101. Technical effects of the first impedance matching network 41 and the first gating switch S1 are the same as those described above, and details are not described herein again.

It can be learned from the foregoing descriptions that the communication chip 32 has the first satellite transmit end SAT1-Tx and the first satellite first receive end SAT1-Rx1 that match the first satellite communication antenna 311. In this case, the first satellite communication antenna 311 may be an antenna having a 1T1R function. In 1T1R, 1T means one transmit end (namely, the first satellite transmit end SAT1-Tx), and 1R means one receive end (namely, the first satellite first receive end SAT1-Rx1).

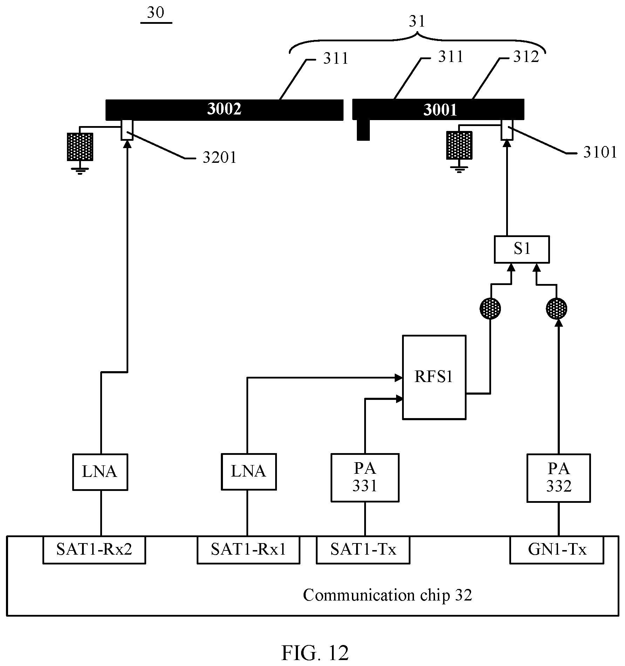

In some other embodiments of this application, the first satellite communication antenna 311 may be an antenna having a 1T2R function. For example, as shown in FIG. 12, the first satellite communication antenna 311 may further include a second stub 3002, and the second stub 3002 may have a second electrical connection end 3201. The second stub 3002 may be spaced apart from the first stub 3001, that is, there is a gap between the first stub 3001 and the second stub 3002, so that the first stub 3001 and the second stub 3002 are not connected to each other or not in contact with each other. For example, another stub may be disposed between the first stub 3001 and the second stub 3002, or no other stub may be disposed between the first stub 3001 and the second stub 3002. This is not limited in this application. FIG. 12 is merely an example for describing relative locations of the first stub 3001 and the second stub 3002, and does not constitute a limitation on disposition locations of the first stub 3001 and the second stub 3002. In addition, the second stub 3002 may be located on a left side of the first stub 3001, as shown in FIG. 12; or the second stub 3002 may be located on a right side of the first stub 3001. This is not limited in this application.

In addition, still as shown in FIG. 12, the communication chip 32 further has a first satellite second receive end SAT1-Rx2. The first satellite second receive end SAT1-Rx2 is configured to receive the radio frequency signal of the first satellite operating frequency band (for example, the downlink frequency band 2170/MHz to 2200/MHz). The first satellite second receive end SAT1-Rx2 may be coupled to the second electrical connection end 3201 of the second stub 3002. In this case, in 1T2R, 2R means two receive ends (namely, the first satellite first receive end SAT1-Rx1 and the first satellite second receive end SAT1-Rx2).

In this case, when the first satellite communication antenna 311 sends the radio frequency signal of the first satellite operating frequency band, the first stub 3001 is in an operating state, to send the radio frequency signal of the first satellite operating frequency band. When the first satellite communication antenna 311 receives the radio frequency signal of the first satellite operating frequency band, the first stub 3001 and the second stub 3002 may be in an operating state at the same time, to receive the radio frequency signal of the first satellite operating frequency band. This can expand a width and a gain of a receive beam of the first satellite communication antenna 311, and improve sensitivity of the first satellite communication antenna 311 as a receive antenna, thereby making it easier for the electronic device 01 to implement a satellite alignment function.

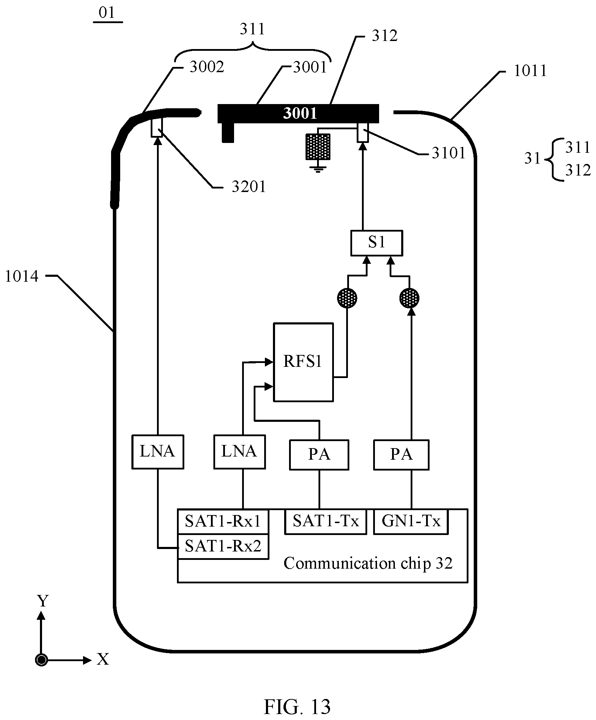

For example, when the electronic device 01 is a bar-type phone shown in FIG. 13, a part of the top frame 1011 in the metal frame of the electronic device 01 may be reused as the first stub 3001, and a part of the top frame 1011 and a part of the second side frame 1014 may be reused as the second stub 3002. When there is no other stub between the first stub 3001 and the second stub 3002, a gap between the first stub 3001 and the second stub 3002 may be filled with a dielectric layer, so that the first stub 3001 and the second stub 3002 are spaced apart. FIG. 13 is described by using an example in which the second stub 3002 is located on a left side of the first stub 3001. In some other embodiments, the second stub 3002 may alternatively be located on a right side of the first stub 3001. In conclusion, the electronic device 01 may include the first satellite communication antenna 311 (for example, a high earth orbit satellite communication antenna) and the first ground network communication antenna 312 (for example, a cellular antenna). The first satellite communication antenna 311 has a 1T2R function.

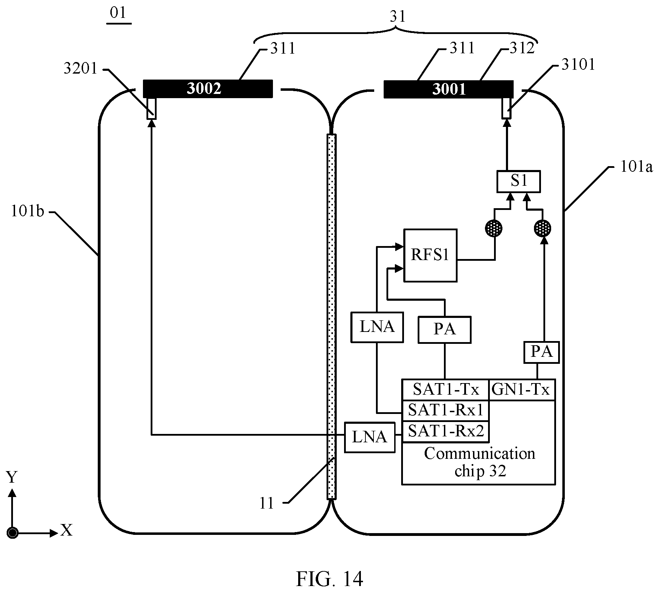

Alternatively, for another example, when the electronic device 01 is a foldable phone shown in FIG. 14, the first metal frame 101a of the electronic device 01 may include the first stub 3001, that is, a part of the first metal frame 101a is reused as the first stub 3001. The first stub 3001 may be located in the middle of a top frame of the first metal frame 101a, that is, the first stub 3001 is a middle stub of the top frame of the first metal frame 101a (an upper end of the first metal frame 101a). There may be a gap between the first stub 3001 and stubs that are located on two sides of the first stub 3001 and that are in the top frame of the first metal frame 101a.

In addition, still as shown in FIG. 14, the second metal frame 101b of the electronic device 01 may include the second stub 3002, that is, a part of the second metal frame 101b is reused as the second stub 3002. The second stub 3002 may be located in the middle of a top frame of the second metal frame 101b (an upper end of the second metal frame 101b), that is, the second stub 3002 is a middle stub of the top frame of the second metal frame 101b. There may be a gap between the second stub 3002 and stubs that are located on two sides of the second stub 3002 and that are in the top frame of the second metal frame 101b. The second electrical connection end 3201 of the second stub 3002 may be electrically connected to the first satellite second receive end SAT1-Rx2 of the communication chip 32 through a circuit board that passes through a shaft (that is, runs through the hinge 11), for example, a flexible circuit board (flexible printed circuit, FPC).

Based on this, compared with a solution in which the first stub 3001 and the second stub 3002 are disposed on a same metal frame, a solution in which the first stub 3001 and the second stub 3002 are respectively located on different metal frames (for example, the first metal frame 101a and the second metal frame 101b), and the first metal frame 101a and the second metal frame 101b may be provided with larger sizes to respectively serve as the first stub 3001 and the second stub 3002 can increase physical lengths of the first stub 3001 and the second stub 3002, thereby increasing an antenna aperture and a gain.

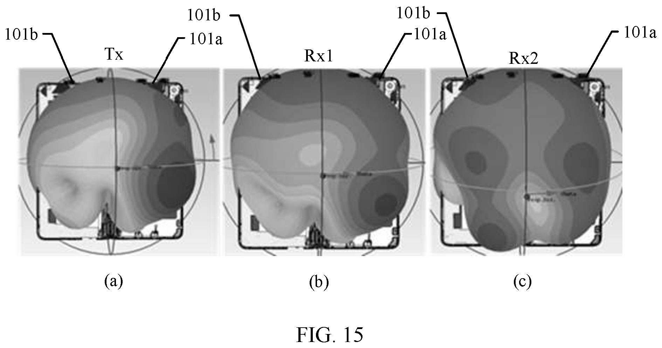

In this case, still as shown in FIG. 14, because a part of the top frame of the first metal frame 101a is reused as the first stub 3001, and a part of the top frame of the second metal frame 101b is reused as the second stub 3002, the first stub 3001 and the second stub 3002 may be located at a same end of the hinge 11, that is, both the first stub 3001 and the second stub 3002 are disposed at an upper end of the electronic device 01. In this way, when the first satellite communication antenna 311 receives (Rx) the first satellite operating frequency band through the first stub 3001, it may be learned from (b) in FIG. 15 that a darker color part of an antenna directivity pattern, that is, a part with a larger gain, covers the top frame of the first metal frame 101a. In addition, when the first satellite communication antenna 311 receives (Rx) the first satellite operating frequency band through the second stub 3002, it may be learned from (c) in FIG. 15 that a darker color part of an antenna directivity pattern, that is, a part with a larger gain, covers the top frame of the second metal frame 101b.

Still as shown in FIG. 14, the first stub 3001 and the second stub 3002 may be symmetrically disposed with respect to the hinge 11. In this way, a directivity pattern shown in (a) in FIG. 15 when the first satellite communication antenna 311 sends (Tx) the first satellite operating frequency band is omnidirectional with the antenna directivity patterns shown in (b) in FIG. 15 and (c) in FIG. 15 when the first satellite communication antenna 311 receives (Rx) the first satellite operating frequency band, thereby implementing better circular polarization coverage with a relatively large coverage area. In addition, gain distributions (namely, color depths) of the foregoing directivity patterns are relatively consistent. This may indicate that radiation performance is consistent when the first satellite communication antenna 311 sends or receives the first satellite operating frequency band. Therefore, when using the first satellite communication antenna 311 for satellite communication, the user may less need to swing the mobile phone to change a satellite alignment angle, thereby making it easier to implement a satellite alignment function.

In addition, still as shown in FIG. 14, when there is a gap between the first stub 3001 (or the second stub 3002) and other stubs on two sides of the stub, two ends of the first stub 3001 (or the second stub 3002) may be open ends. In this case, the first electrical connection end 3101 of the first stub 3001 may be located at an end that is of the first stub 3001 and that is away from the second stub 3002, so that the first electrical connection end 3101 can be disposed at the open end of the first stub 3001, thereby helping increase an antenna aperture. Similarly, the second electrical connection end 3201 may be located at an end that is of the second stub 3002 and that is away from the first stub 3001, so that the second electrical connection end 3201 can be disposed at the open end of the second stub 3002, thereby increasing an antenna aperture. In this embodiment of this application, the open end may not be grounded, and the open end is not electrically connected to another conductor. The open end may also be referred to as a free end, an opening end, or an open-circuit end. It should be understood that, in some embodiments, another conductor may be coupled through the open end, to transfer coupling energy (which may be understood as transferring current).

The foregoing descriptions are provided by using an example in which the antenna structure 31 includes the first satellite communication antenna 311 and the first ground network communication antenna 312. The first satellite communication antenna 311 may serve as a high earth orbit satellite communication antenna, and is configured to receive and send the radio frequency signal of the first satellite operating frequency band (for example, including the uplink frequency band 1980/MHz to 2010/MHz and the downlink frequency band 2170/MHz to 2200/MHz). In addition, the first satellite communication antenna 311 may have a 1T1R function or a 1T2R function. In some other embodiments of this application, the first satellite communication antenna 311 may alternatively have two or more satellite transmit ends and more than two satellite receive ends. Details are not described herein in this application. In addition, the first ground network communication antenna 312 may be a cellular antenna, and is configured to receive and send the signal of the cellular communication frequency band.

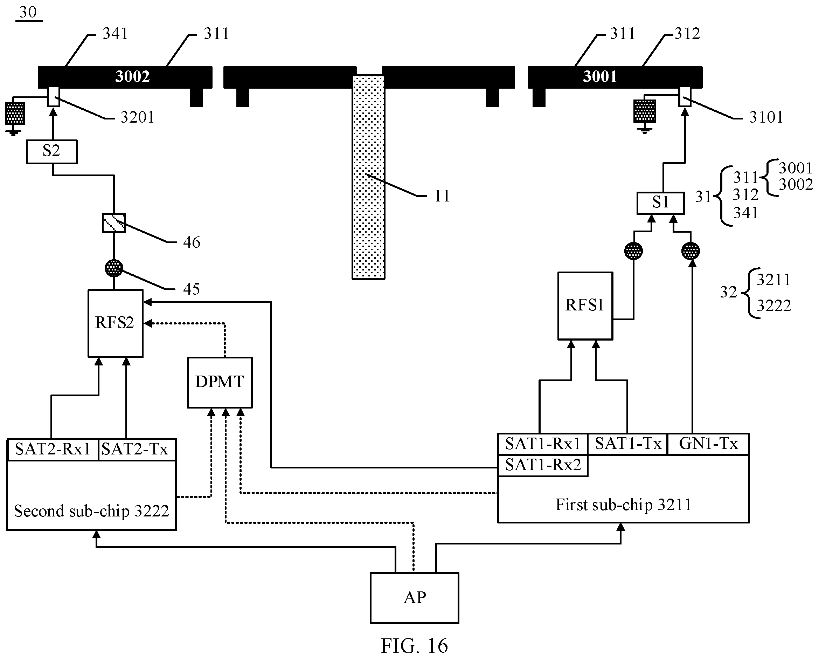

In some other embodiments of this application, as shown in FIG. 16, the antenna structure 31 may further include a second satellite communication antenna 341, and the second satellite communication antenna 341 may include the second stub 3002. In addition, the communication chip 32 may have a second satellite transmit end SAT2-Tx and a second satellite first receive end SAT2-Rx1. For example, the communication chip 32 may include a first sub-chip 3211 and a second sub-chip 3222. The first sub-chip 3211 may include the first satellite communication chip 321 and the first ground network communication chip 322 shown in FIG. 4. In this case, the first sub-chip 3211 may have the first satellite transmit end SAT1-Tx, the first satellite first receive end SAT1-Rx1, the first satellite second receive end SAT1-Rx2, and the first ground network transmit end GN1-Tx. The second sub-chip 3222 may have the second satellite transmit end SAT2-Tx and the second satellite first receive end SAT2-Rx1, and the second sub-chip 3222 may be referred to as a second satellite communication chip.

In addition, in some embodiments of this application, when the second satellite communication antenna 341 is a low earth orbit satellite communication antenna, the second satellite transmit end SAT2-Tx is configured to send a radio frequency signal of a second satellite operating frequency band (for example, an uplink frequency band 1668/MHz to 1675/MHz), and the second satellite first receive end SAT2-Rx1 is configured to receive the radio frequency signal of the second satellite operating frequency band (for example, a downlink frequency band 1518/MHz to 1525/MHz). In this case, the second satellite communication antenna 341 has one transmit end, namely, the second satellite transmit end SAT2-Tx, and one receive end, namely, the second satellite first receive end SAT2-Rx1. Therefore, the second satellite communication antenna 341 can implement a 1T1R function.

It can be learned from the foregoing descriptions that the second satellite communication antenna 341 may include the second stub 3002, and the second stub 3002 serves as a transmit antenna and a receive antenna of the second satellite communication antenna 341. In addition, the first satellite communication antenna 311 may also include the second stub 3002, and the second stub 3002 may serve as a receive antenna of the first satellite communication antenna 311. Therefore, the first satellite communication antenna 311 serving as a high earth orbit satellite antenna and the second satellite communication antenna 341 serving as a low earth orbit satellite antenna may share a same stub, that is, the second stub 3002, to improve space utilization of the electronic device 01. In some other embodiments of this application, the first satellite communication antenna 311 may be a low earth orbit satellite antenna, and the second satellite communication antenna 341 may be a high earth orbit satellite antenna. This is not limited in this application. For ease of description, the following uses an example in which the first satellite communication antenna 311 may be a high earth orbit satellite antenna and the second satellite communication antenna 341 may be a low earth orbit satellite antenna.

On the basis that the first satellite communication antenna 311 and the second satellite communication antenna 341 share a stub, to implement co-feeding of the first satellite communication antenna 311 and the second satellite communication antenna 341, still as shown in FIG. 16, the antenna apparatus 30 may further include a second radio frequency switch RFS2. The second radio frequency switch RFS2 may be coupled between the first satellite second receive end SAT1-Rx2 and the second electrical connection end 3201. In addition, the second radio frequency switch RFS2 is further coupled between the second satellite transmit end SAT2-Tx and the second electrical connection end 3201, and the second radio frequency switch RFS2 is further coupled between the second satellite first receive end SAT2-Rx1 and the second electrical connection end 3201. The second radio frequency switch RFS2 may be configured to connect the first satellite second receive end SAT1-Rx2, the second satellite transmit end SAT2-Tx, or the second satellite first receive end SAT2-Rx1 to the second electrical connection end 3201. For example, the second radio frequency switch RFS2 may be an SPMT switch, for example, an SP4T switch, or a combination of a plurality of SPST switches. This is not limited in this application.

Still as shown in FIG. 16, because the second radio frequency switch RFS2 is coupled to the first satellite second receive end SAT1-Rx2, the second satellite transmit end SAT2-Tx, and the second satellite first receive end SAT2-Rx1, a control signal needs to be used to control one path in the second radio frequency switch RFS2 to be connected, to select one of the first satellite second receive end SAT1-Rx2, the second satellite transmit end SAT2-Tx, and the second satellite first receive end SAT2-Rx1 to be connected to the second electrical connection end 3201. To implement the foregoing functions, for example, the antenna apparatus 30 may further include an application processor (application processor, AP) and a double-pole multi-throw (double-pole multi-throw, SPMT) switch, for example, a double-pole double-throw (double pole double throw, DPDT) switch.

In this case, the AP may control, according to a requirement, the DPMP to select the first sub-chip 3211 or the second sub-chip 3222 to control the DPMT switch. For example, when the second stub 3002 needs to serve as a receive antenna of the first satellite communication antenna 311, the AP may select, according to the foregoing requirement, the first sub-chip 3211 to control the DPMT switch, so that a control signal that is output by the DPMT to the second radio frequency switch RFS2 can control the second radio frequency switch RFS2 to connect the first satellite second receive end SAT1-Rx2 of the first sub-chip 3211 to the second electrical connection end 3201.

Alternatively, when the second stub 3002 needs to serve as a transmit antenna or a receive antenna of the second satellite communication antenna 341, the AP may select, according to the foregoing requirement, the second sub-chip 3222 to control the DPMT switch, so that a control signal that is output by the DPMT to the second radio frequency switch RFS2 can control the second radio frequency switch RFS2 to connect the second satellite transmit end SAT2-Tx or the second satellite first receive end SAT2-Rx1 of the second sub-chip 3222 to the second electrical connection end 3201.

In addition, still as shown in FIG. 16, the antenna apparatus 30 may further include a third radio frequency test base 45 and a second impedance matching network 46. The third radio frequency test base 45 and the second impedance matching network 46 may be connected in series between the second radio frequency switch RFS2 and the second electrical connection end 3201 of the second stub 3002. The second impedance matching network 46 may perform impedance matching on a communication link of the second satellite communication antenna 341. The third radio frequency test base 45 may be connected to a test instrument, to test and adjust a related parameter for impedance matching on the communication link of the second satellite communication antenna 341.

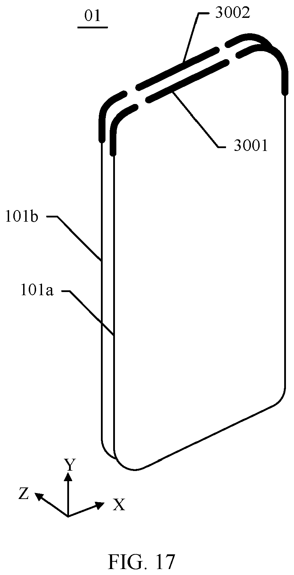

FIG. 16 is described by using an example in which the electronic device is a foldable phone, and the first stub 3001 and the second stub 3002 are respectively located on two sides of the hinge 11 of the electronic device. Based on this, because the first satellite communication antenna 311 and the first ground network communication antenna 312 share the first stub 3001, when the first ground network communication antenna 312 receives and sends the radio frequency signal of the first ground network operating frequency band, the first satellite communication antenna 311 may be in a non-operating state (that is, does not receive and send a signal). In addition, when the electronic device 01 is in a folded state shown in FIG. 17, the first metal frame 101a and the second metal frame 101b are stacked, so that the first stub 3001 on the first metal frame 101a and the second stub 3002 on the second metal frame 101b are close to each other, and therefore may be coupled to each other. Therefore, when the first ground network communication antenna 312 receives and sends the radio frequency signal of the first ground network operating frequency band, the second stub 3002 may serve as a parasitic antenna of the first ground network communication antenna 312, so that a size of the first ground network communication antenna 312 can be increased, thereby increasing an antenna aperture and a gain of the first ground network communication antenna 312. Therefore, when the first ground network communication antenna 312 receives and sends the radio frequency signal of the first ground network operating frequency band, the second satellite communication antenna 341 may also be in a non-operating state (that is, does not receive and send a signal).

Based on this, when the electronic device 01 is in the folded state shown in FIG. 17, when the first ground network communication antenna 312 receives and sends the radio frequency signal of the first ground network operating frequency band, to prevent the second impedance matching network 46 from affecting a signal on the second stub 3002 serving as the parasitic antenna of the first ground network communication antenna 312, the antenna apparatus 30 may further include a second gating switch S2 shown in FIG. 16. The second gating switch S2 may be coupled between the second radio frequency switch RFS2 and the second electrical connection end 3201, and the second gating switch S2 may be located in the clearance area 300 of the antenna apparatus 30 (as shown in FIG. 3).

In this case, still as shown in FIG. 16, the third radio frequency test base 45 may be coupled between the second gating switch S2 and the second radio frequency switch RFS2. For example, at least a part of the second impedance matching network 46 may be coupled to a side that is of the second gating switch S2 and that is away from the second electrical connection end 3201. For example, the second impedance matching network 46 is coupled between the second gating switch S2 and the third radio frequency test base 45. In this way, when the first gating switch S1 connects the first ground network transmit end GN1-Tx to the first electrical connection end 3101 of the first stub 3001, the second gating switch S2 is configured to disconnect at least a part of the second impedance matching network 46 from the second electrical connection end 3201 of the second stub 3002. In this way, when the electronic device 01 is in the folded state shown in FIG. 17, the first stub 3001 and the second stub 3002 are coupled to each other. Therefore, when the second stub 3002 serves as the parasitic antenna of the first ground network communication antenna 312 to receive and send the radio frequency signal of the first ground network operating frequency band (for example, the cellular communication frequency band), a signal on the second stub 3002 is not affected by the second impedance matching network 46, thereby increasing an aperture and a gain of the first ground network communication antenna 312. Alternatively, a first part of the second impedance matching network 46 is coupled between the second gating switch S2 and the second electrical connection end 3201, and a second part of the second impedance matching network 46 is coupled between the second gating switch S2 and the third radio frequency test base 45.

The foregoing descriptions are provided by using an example in which at least the part of the second impedance matching network 46 may be coupled to the side that is of the second gating switch S2 and that is away from the second electrical connection end 3201. In some other embodiments of this application, at least a part of the second impedance matching network 46 may be coupled between the second gating switch S2 and the second electrical connection end 3201. In this case, technical effects of the second gating switch S2, the second impedance matching network 46, and the third radio frequency test base 45 are the same as those described above, and details are not described herein again.

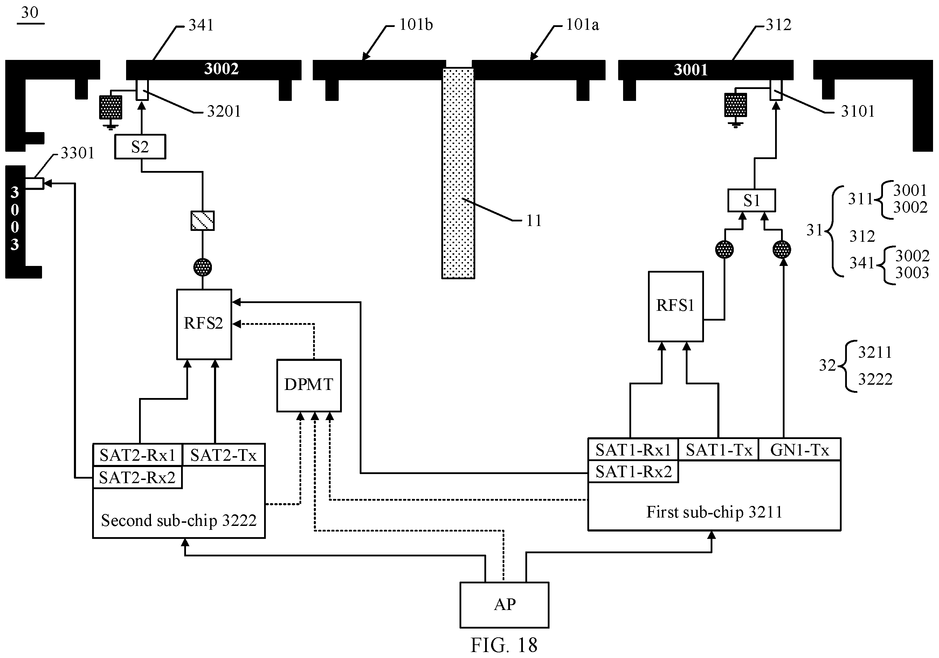

The foregoing descriptions are provided by using an example in which the second satellite communication antenna 341 implements a 1T1R function. In some other embodiments of this application, the second satellite communication antenna 341 may alternatively implement a 1T2R function. For example, as shown in FIG. 18, the second satellite communication antenna 341 further includes a third stub 3003, and the third stub 3003 may have a third electrical connection end 3301. The third stub 3003 may be spaced apart from the first stub 3001 and the second stub 3002. A manner in which the third stub 3003 is spaced apart from the first stub 3001 and the second stub 3002 may be similar to a manner in which the first stub 3001 is spaced apart from the second stub 3002, and details are not described herein again.

In addition, still as shown in FIG. 18, the communication chip, for example, the second sub-chip 3222 in the communication chip, may further have a second satellite second receive end SAT2-Rx2, and the second satellite second receive end SAT2-Rx2 is configured to receive the radio frequency signal of the second satellite operating frequency band (for example, the downlink frequency band 1518/MHz to 1525/MHz). The second satellite second receive end SAT2-Rx2 may be coupled to the third electrical connection end 3301 of the third stub 3003.

In this case, when the second satellite communication antenna 341 sends the radio frequency signal of the second satellite operating frequency band, the second stub 3002 is in an operating state, to send the radio frequency signal of the second satellite operating frequency band. When the second satellite communication antenna 341 receives the radio frequency signal of the second satellite operating frequency band, the second stub 3002 and the third stub 3003 are in an operating state at the same time, to receive the radio frequency signal of the second satellite operating frequency band. In this way, the second satellite communication antenna 341 may have a 1T2R function, to expand a width and a gain of a receive beam of the second satellite communication antenna 341, and improve sensitivity of the second satellite communication antenna 341 as a receive antenna, thereby making it easier for the electronic device 01 to implement a satellite alignment function.

FIG. 18 is described by using an example in which the second satellite second receive end SAT2-Rx2 is directly coupled to the third electrical connection end 3301 of the third stub 3003. In some other embodiments of this application, a radio frequency switch, for example, an SP4T, may be alternatively coupled between the second satellite second receive end SAT2-Rx2 and the third electrical connection end 3301. In this way, according to a user requirement, by controlling a path of a radio frequency switch, the second satellite second receive end SAT2-Rx2 is connected to the third electrical connection end 3301, so that the second satellite communication antenna 341 has a 1T2R function; or the second satellite second receive end SAT2-Rx2 is disconnected from the third electrical connection end 3301, so that the second satellite communication antenna 341 has a 1T1R function.

It can be learned from the foregoing descriptions that, as shown in FIG. 18, when both the first satellite communication antenna 311 and the second satellite communication antenna 341 have a 1T2R function, the first satellite communication antenna 311 includes the first stub 3001 and the second stub 3002, the first stub 3001 may receive and send the radio frequency signal of the first satellite operating frequency band, and the second stub 3002 may receive the radio frequency signal of the first satellite operating frequency band. When the electronic device is a foldable phone, the first stub 3001 and the second stub 3002 are respectively disposed on the first metal frame 101a and the second metal frame 101b. In addition, the first ground network communication antenna 312 and the first satellite communication antenna 311 share the first stub 3001. In addition, the second satellite communication antenna 341 includes the second stub 3002 and the third stub 3003, the second stub 3002 is configured to receive and send the radio frequency signal of the second satellite operating frequency band, and the third stub 3003 is configured to receive the radio frequency signal of the second satellite operating frequency band. Both the second stub 3002 and the third stub 3003 are disposed on the second metal frame 101b.

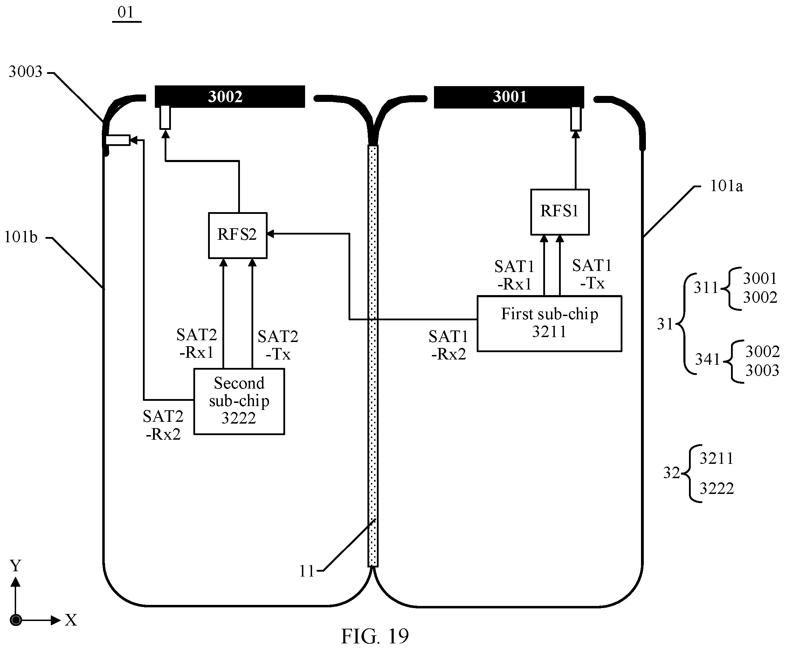

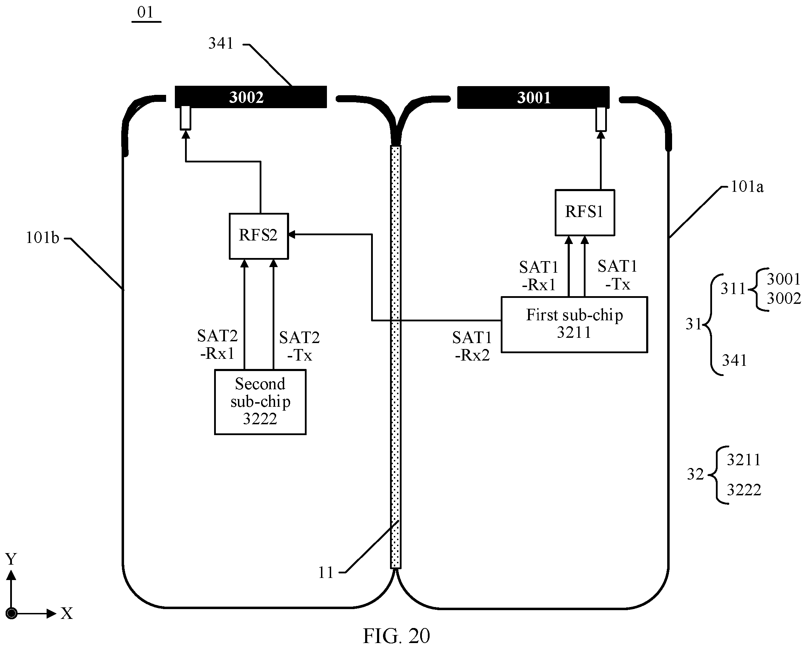

In some other embodiments of this application, as shown in FIG. 19, when the electronic device 01 is a foldable phone, the antenna structure 31 of the electronic device 01 may include only the first satellite communication antenna 311 and the second satellite communication antenna 341, and both the first satellite communication antenna 311 and the second satellite communication antenna 341 have a 1T2R function. In addition, a manner of disposing the first satellite communication antenna 311 and the second satellite communication antenna 341 may be similar to the manner shown in FIG. 18, and details are not described herein again. Alternatively, as shown in FIG. 20, when the antenna structure 31 may include only the first satellite communication antenna 311 and the second satellite communication antenna 341, the first satellite communication antenna 311 has a 1T2R function, and the second satellite communication antenna 341 may have a 1T1R function; or the first satellite communication antenna 311 has a 1T1R function, and the second satellite communication antenna 341 may have a 1T2R function.

Still as shown in FIG. 19, at one moment, only one of the first satellite communication antenna 311 and the second satellite communication antenna 341 may be in an operating state. When the first satellite communication antenna 311 or the second satellite communication antenna 341 is in an operating state, the antenna in the operating state may be configured to implement at least one of a satellite call or satellite short message service message receiving and sending. An operating state of an antenna is a state in which the antenna can receive and send a signal. When the first satellite communication antenna 311 operates, and the second satellite communication antenna 341 is in a non-operating state, the second stub 3002 of the second satellite communication antenna 341 may be reused as a receive antenna of the first satellite communication antenna 311, so that the first satellite communication antenna 311 has a 1T2R function. In addition, when the user selects a satellite communication antenna having a 1T2R function to make a satellite call, a width and a gain of a receive beam of the satellite communication antenna can be expanded, thereby improving sensitivity of the satellite communication antenna as a receive antenna. A manner of disposing a stub serving as a receive antenna and a transmit antenna in the first satellite communication antenna 311 and the second satellite communication antenna 341 may be derived similarly, and details are not described herein again.

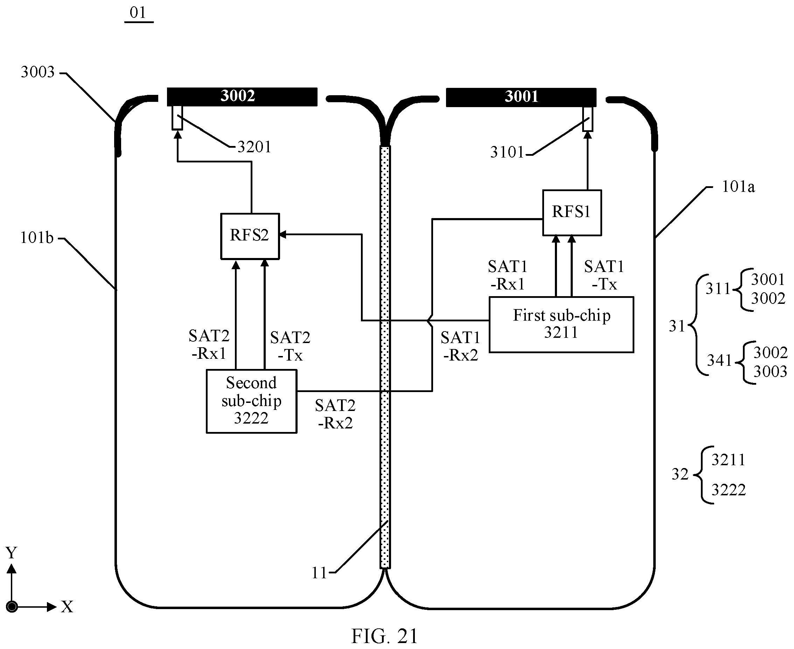

Alternatively, in some other embodiments of this application, as shown in FIG. 21, the first satellite communication antenna 311 includes the first stub 3001 and the second stub 3002, the first stub 3001 may receive and send the radio frequency signal of the first satellite operating frequency band, and the second stub 3002 may receive the radio frequency signal of the first satellite operating frequency band. The second satellite communication antenna 341 includes the second stub 3002 and the first stub 3001, and the second stub 3002 is configured to receive and send the radio frequency signal of the second satellite operating frequency band. In addition, the second satellite second receive end SAT2-Rx2 of the second sub-chip 3222 is coupled to the first electrical connection end 3101 of the first stub 3001, so that the first stub 3001 receives the radio frequency signal of the second satellite operating frequency band. In this case, both the first satellite communication antenna 311 and the second satellite communication antenna 341 have a 1T2R function. For example, the first stub 3001 on the first metal frame 101a and the second stub 3002 on the second metal frame 101b may be symmetrically disposed with respect to the hinge 11, and both are located at an upper end of the hinge 11.

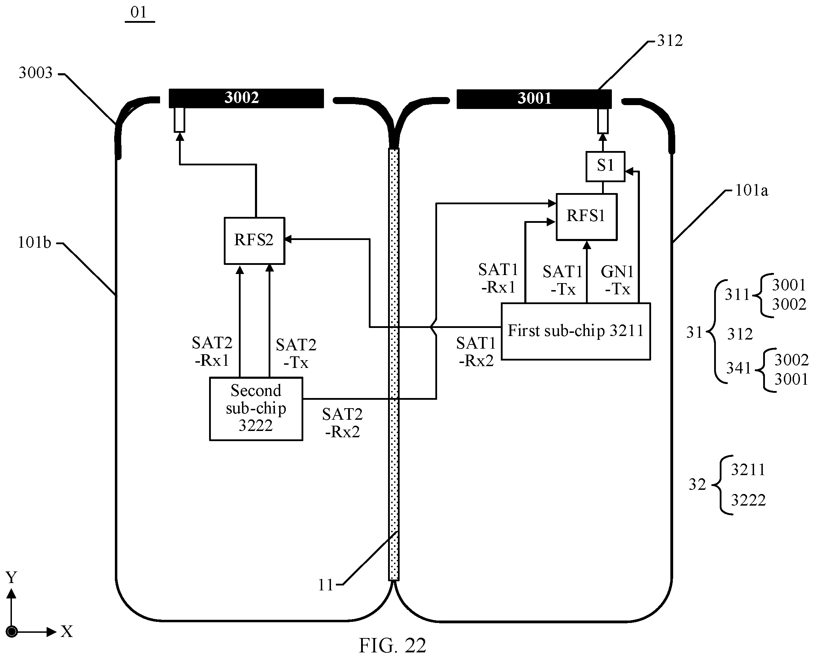

On this basis, when the first satellite communication antenna 311 includes the first stub 3001 and the second stub 3002, and the second satellite communication antenna 341 includes the second stub 3002 and the first stub 3001, as shown in FIG. 22, the antenna structure 31 may further include the first ground network communication antenna 312, and the first stub 3001 may be reused by the first ground network communication antenna 312 with the first satellite communication antenna 311 and the second satellite communication antenna 341. A manner and technical effects of disposing the first ground network communication antenna 312 are the same as those described above, and details are not described herein again.

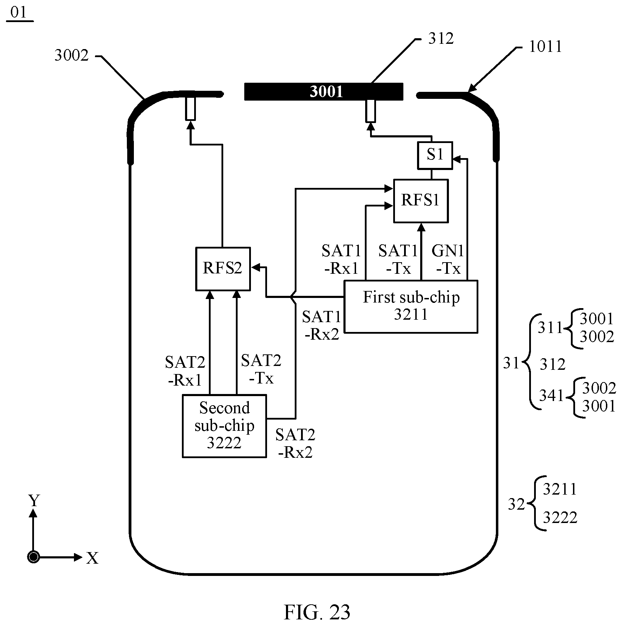

The foregoing descriptions are provided by using an example in which the electronic device 01 having the antenna structure 31 is a foldable phone when the antenna structure 31 includes the first satellite communication antenna 311, the second satellite communication antenna 341, and the first ground network communication antenna 312. In some other embodiments of this application, as shown in FIG. 23, the electronic device 01 may be a bar-type phone. Similarly, the first satellite communication antenna 311 includes the first stub 3001 and the second stub 3002, the second satellite communication antenna 341 includes the second stub 3002 and the first stub 3001, and the first stub 3001 may be reused by the first ground network communication antenna 312 with the first satellite communication antenna 311 and the second satellite communication antenna 341. It can be learned from the foregoing descriptions that the first stub 3001 is a stub shared by the first satellite communication antenna 311, the second satellite communication antenna 341, and the first ground network communication antenna 312. Therefore, to increase a gain of the foregoing antenna and facilitate a satellite alignment operation of the satellite antenna, the first stub 3001 may be disposed as a middle stub of the top frame 1011 in the metal frame. FIG. 23 is described by using an example in which both the first satellite communication antenna 311 and the second satellite communication antenna 341 have a 1T2R function. A quantity of stubs serving as receive antennas and a quantity of stubs serving as transmit antennas in the first satellite communication antenna 311 and the second satellite communication antenna 341 are not limited in this application.

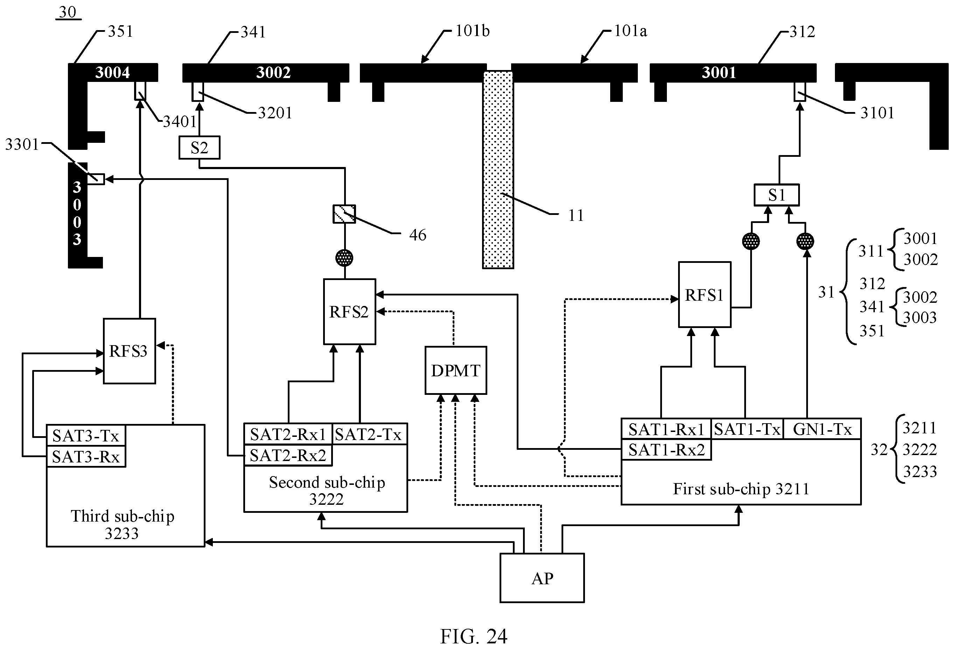

In addition, in some embodiments of this application, as shown in FIG. 24, the antenna structure 31 may further include a third satellite communication antenna 351. The third satellite communication antenna 351 may include a fourth stub 3004, and the fourth stub 3004 has a fourth electrical connection end 3401. The communication chip 32 may further have a third satellite transmit end SAT3-Tx and a third satellite receive end SAT3-Rx. For example, the third satellite communication antenna 351 may be a high earth orbit satellite communication antenna, and the third satellite communication antenna 351 may be configured only to receive and send a short message service message. The third satellite communication antenna may also be referred to as a satellite short message service antenna. In this case, the third satellite transmit end SAT3-Tx is configured to send a radio frequency signal of a third satellite operating frequency band (an uplink frequency band 610/MHz to 1626/MHz), and the third satellite receive end SAT3-Rx is configured to receive the radio frequency signal of the third satellite operating frequency band (a downlink frequency band 2483/MHz to 2500/MHz).

For example, in addition to the first sub-chip 3211 and the second sub-chip 3222, the communication chip 32 shown in FIG. 24 may further include a third sub-chip 3233. The third sub-chip 3233 may have the third satellite transmit end SAT3-Tx and the third satellite receive end SAT3-Rx. In addition, to select the third satellite transmit end SAT3-Tx and the third satellite receive end SAT3-Rx, the antenna apparatus 30 may further include a third radio frequency switch RFS3. The third radio frequency switch RFS3 may be coupled between the third satellite transmit end SAT3-Tx and the fourth electrical connection end 3401 of the fourth stub 3004. The third radio frequency switch RFS3 is further coupled between the third satellite receive end SAT3-Rx and the fourth electrical connection end 3401. The third radio frequency switch RFS3 may be configured to connect the third satellite transmit end SAT3-Tx or the third satellite receive end SAT3-Rx to the fourth electrical connection end 3401. For example, the third radio frequency switch RFS3 may be an SPMT switch, for example, an SP4T switch, or a combination of a plurality of SPST switches. This is not limited in this application.

In this case, when the third sub-chip 3233 controls the third radio frequency switch RFS3 to connect the third satellite transmit end SAT3-Tx to the fourth electrical connection end 3401, the fourth stub 3004 may serve as a transmit antenna of the third satellite communication antenna 351 to send the radio frequency signal of the third satellite operating frequency band (the uplink frequency band 610/MHz to 1626/ MHz). When the third sub-chip 3233 controls the third radio frequency switch RFS3 to connect the third satellite receive end SAT3-Rx to the fourth electrical connection end 3401, the fourth stub 3004 may serve as a receive antenna of the third satellite communication antenna 351 to receive the radio frequency signal of the third satellite operating frequency band (the downlink frequency band 2483/MHz to 2500/MHz).

Based on this, in some embodiments of this application, when the electronic device 01 is a foldable phone shown in FIG. 24, the antenna structure 31 of the electronic device 01 may include the first ground network communication antenna 312, the first satellite communication antenna 311, the second satellite communication antenna 341, and the third satellite communication antenna 351. It can be learned from the foregoing descriptions that the first satellite communication antenna 311 and the second satellite communication antenna 341 may be configured to make a voice call and receive and send a short message service message (or a short packet). The third satellite communication antenna 351 is configured only to receive and send a short message service message.

For example, the first satellite communication antenna 311 may include the first stub 3001 and the second stub 3002, the first stub 3001 serves as a receive antenna and a transmit antenna of the first satellite communication antenna 311, and the second stub 3002 serves as a receive antenna of the first satellite communication antenna 311, so that the first satellite communication antenna 311 has a 1T2R function. The second satellite communication antenna 341 may include the second stub 3002 and the third stub 3003. The second stub 3002 may be further reused as a receive antenna and a transmit antenna of the second satellite communication antenna 341, and the third stub 3003 serves as a receive antenna of the second satellite communication antenna 341, so that the second satellite communication antenna 341 has a 1T2R function.

Still as shown in FIG. 24, the fourth stub 3004 of the third satellite communication antenna 351 may be spaced apart from the first stub 3001. When the antenna structure 31 further includes the second stub 3002 and the third stub 3003, the fourth stub 3004 is spaced apart from both the second stub 3002 and the third stub 3003. A manner in which different stubs are spaced apart is the same as that described above, and details are not described herein again. For example, the first stub 3001 may be disposed on the first metal frame 101a, and the second stub 3002, the fourth stub 3004, and the third stub 3003 may be disposed on the second metal frame 101b.

In addition, when the third satellite communication antenna 351 receives and sends the radio frequency signal of the third satellite operating frequency band, the second satellite communication antenna 341 and the first satellite communication antenna 311 may be in a non-operating state. In this case, the second gating switch S2 may be controlled to disconnect at least a part of the second impedance matching network 46 from the second electrical connection end 3201 of the second stub 3002. In this way, the second stub 3002 and the fourth stub 3004 may be coupled to each other. Therefore, when the second stub 3002 serves as a parasitic antenna of the third satellite communication antenna 351 to receive and send the radio frequency signal of the third satellite operating frequency band, a signal on the second stub 3002 is not affected by the second impedance matching network 46, thereby increasing an aperture and a gain of the third satellite communication antenna 351.

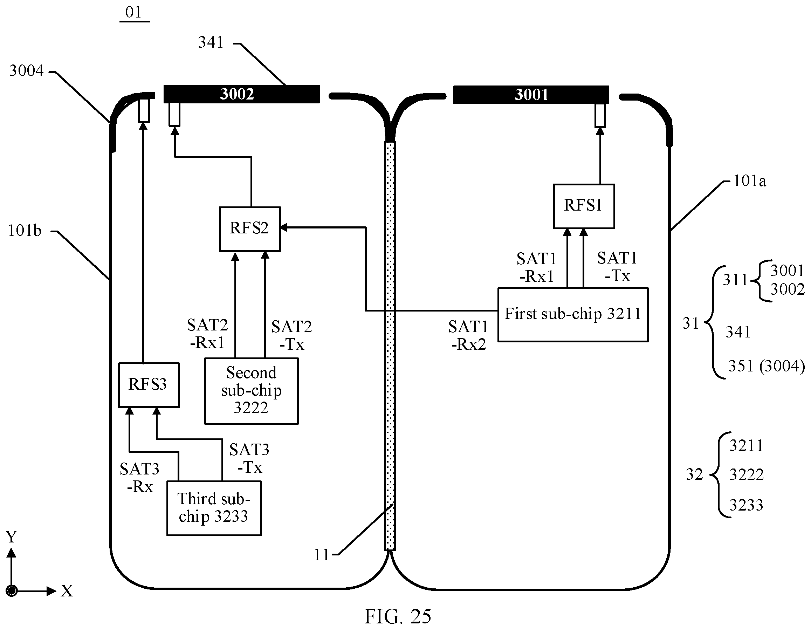

Alternatively, in some other embodiments of this application, when the electronic device 01 is a foldable phone shown in FIG. 25, the antenna structure 31 of the electronic device 01 may include the first satellite communication antenna 311, the second satellite communication antenna 341, and the third satellite communication antenna 351. The first satellite communication antenna 311 has a 1T2R function, and the second satellite communication antenna 341 may have a 1T1R function. The third satellite communication antenna 351 and the second satellite communication antenna 341 are located on a same metal frame, for example, on the second metal frame 101b.

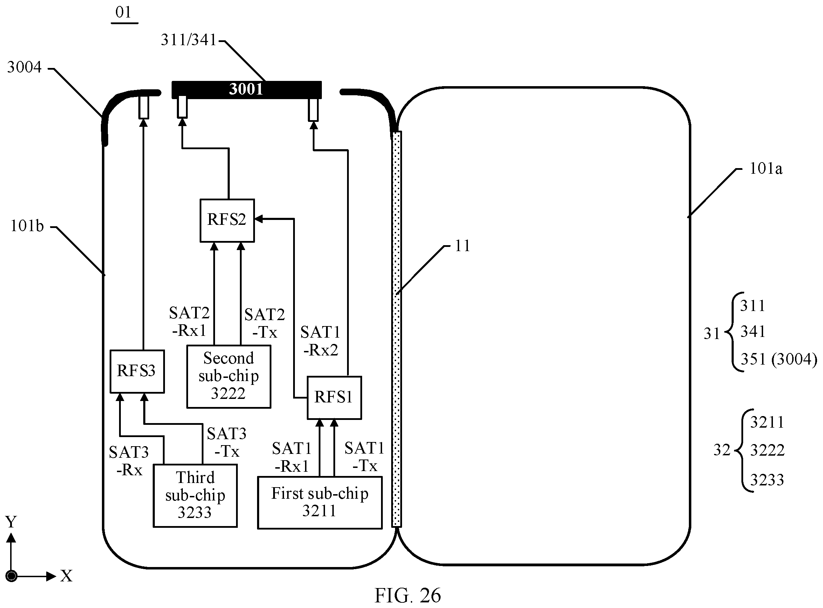

Alternatively, when the electronic device 01 is a foldable phone shown in FIG. 26, and the antenna structure 31 of the electronic device 01 may include the first satellite communication antenna 311, the second satellite communication antenna 341, and the third satellite communication antenna 351, the first satellite communication antenna 311 and the second satellite communication antenna 341 may share the first stub 3001, and at least one of the first satellite communication antenna 311 and the second satellite communication antenna 341 may have a 1T2R function. In addition, the third satellite communication antenna 351, the first satellite communication antenna 311, and the second satellite communication antenna 341 may be located on a same metal frame, for example, on the second metal frame 101b.

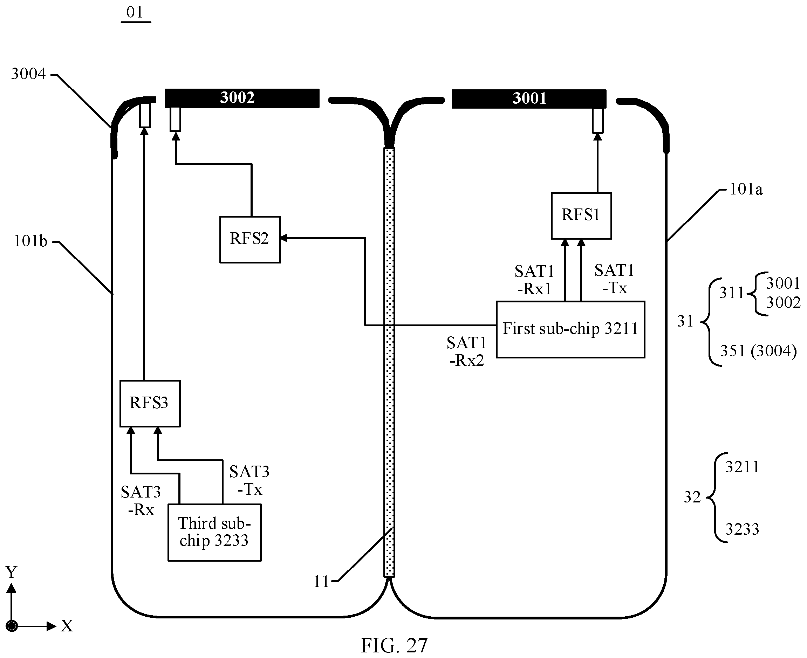

Alternatively, in some other embodiments of this application, when the electronic device 01 is a foldable phone shown in FIG. 27, the antenna structure 31 of the electronic device 01 may include the first satellite communication antenna 311 and a satellite short message service antenna (that is, the third satellite communication antenna 351). The first satellite communication antenna 311 has a 1T2R function (or a 1T1R function), and the first satellite communication antenna 311 is configured to implement at least one of a satellite call or satellite short message service message receiving and sending. The third satellite communication antenna 351 and the second stub 3002 of the first satellite communication antenna 311 are located on a same metal frame, for example, on the second metal frame 101b. For example, at one moment, only one of the first satellite communication antenna 311 and the satellite short message service antenna (that is, the third satellite communication antenna 351) is in an operating state.

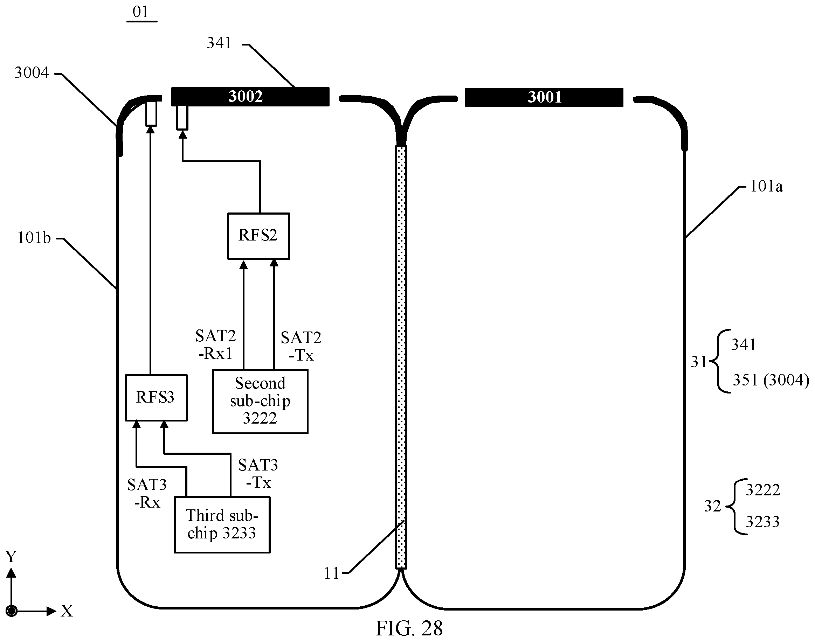

Alternatively, in some other embodiments of this application, when the electronic device 01 is a foldable phone shown in FIG. 28, the antenna structure 31 of the electronic device 01 may include the second satellite communication antenna 341 and the third satellite communication antenna 351. The second satellite communication antenna 341 has a 1T1R function (or a 1T2R function). The third satellite communication antenna 351 and the second satellite communication antenna 341 are located on a same metal frame, for example, on the second metal frame 101b.

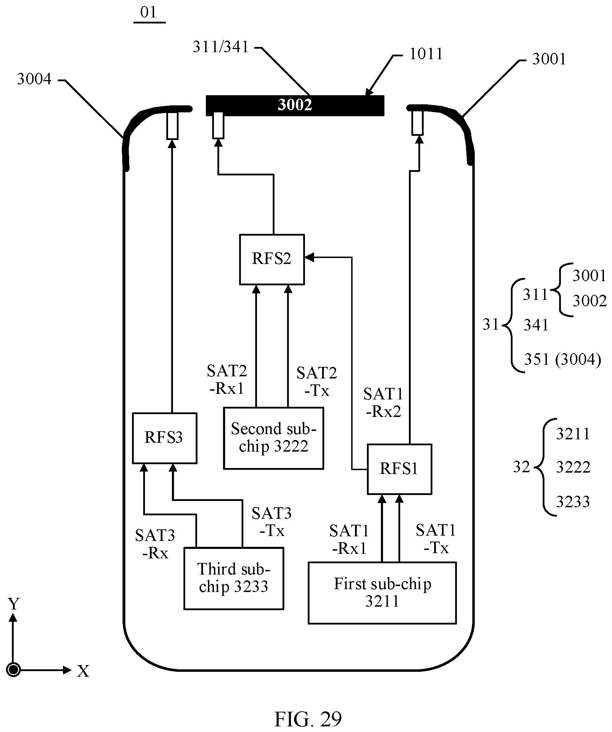

The foregoing descriptions are provided by using an example in which the electronic device 01 is a foldable phone. In some other embodiments of this application, the electronic device 01 may alternatively be a bar-type phone shown in FIG. 29. In this case, the antenna structure 31 of the electronic device 01 may include the first satellite communication antenna 311, the second satellite communication antenna 341, and the third satellite communication antenna 351 (including the fourth stub 3004). The first satellite communication antenna 311 and the second satellite communication antenna 341 may share the first stub 3001, and at least one of the first satellite communication antenna 311 and the second satellite communication antenna 341 may have a 1T2R function. The top frame 1011 in the metal frame of the electronic device 01 may include the first stub 3001, the second stub 3002, and at least a part of the fourth stub 3004, and the second stub 3002 may be located between the first stub 3001 and the fourth stub 3004.

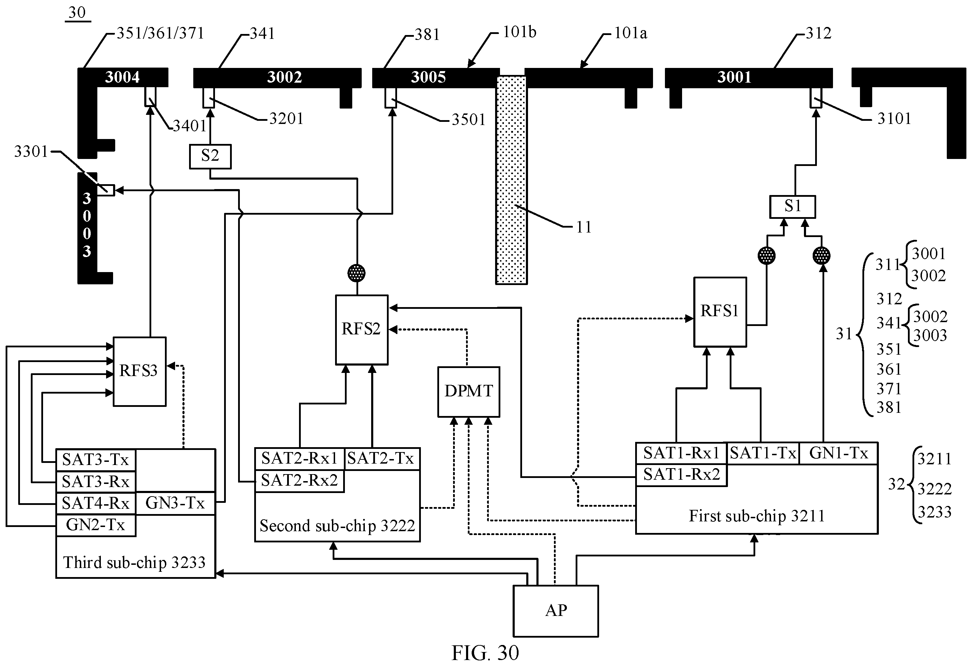

In addition, when the antenna structure 31 includes the fourth stub 3004, as shown in FIG. 30, the antenna structure 31 may further include a satellite positioning antenna 361, and the satellite positioning antenna 361 may include the fourth stub 3004. In this case, the satellite positioning antenna 361 and the third satellite communication antenna 351 may share the fourth stub 3004. In addition, the third sub-chip 3233 in the communication chip 32 further has a positioning satellite receive end SAT4-Rx, and the positioning satellite receive end SAT4-Rx is configured to receive a radio frequency signal of a fourth satellite operating frequency band. For example, the satellite positioning antenna 361 may be a global positioning system (global positioning system, GPS) satellite antenna or a BeiDou satellite antenna. In this case, the fourth satellite operating frequency band may be a GPS antenna or BeiDou antenna communication frequency band. In addition, the third radio frequency switch RFS3 is further coupled between the positioning satellite receive end SAT4-Rx and the fourth electrical connection end 3401. The third radio frequency switch RFS3 may be configured to connect the third satellite transmit end SAT3-Tx, the third satellite receive end SAT3-Rx, or the positioning satellite receive end SAT4-Rx to the fourth electrical connection end 3401.

In this way, when the third sub-chip 3233 controls the third radio frequency switch RFS3 to connect the third satellite transmit end SAT3-Tx or the third satellite receive end SAT3-Rx to the fourth electrical connection end 3401, the fourth stub 3004 may serve as a receive antenna and a transmit antenna of the third satellite communication antenna 351 to send the radio frequency signal of the third satellite operating frequency band. When the third sub-chip 3233 controls the third radio frequency switch RFS3 to connect the positioning satellite receive end SAT4-Rx to the fourth electrical connection end 3401, the fourth stub 3004 may serve as a receive antenna of the satellite positioning antenna 361 to receive the radio frequency signal of the fourth satellite operating frequency band.

In some other embodiments of this application, still as shown in FIG. 30, the antenna structure 31 may further include a second ground network communication antenna 371, and the second ground network communication antenna 371 may include the fourth stub 3004. In this case, the second ground network communication antenna 371 may share the fourth stub 3004 with the satellite positioning antenna 361 and the third satellite communication antenna 351. In addition, the third sub-chip 3233 in the communication chip 32 further has a second ground network transmit end GN2-Tx. The second ground network transmit end GN2-Tx is configured to send a radio frequency signal of a second ground network operating frequency band. For example, the second ground network communication antenna 371 may be a Wi-Fi antenna or a cellular antenna. The following uses an example in which the second ground network communication antenna 371 is a Wi-Fi antenna. For example, the second ground network operating frequency band may include a Wi-Fi 2.4G frequency band (2400/MHz to 2483.5/MHz).

In addition, still as shown in FIG. 30, the third radio frequency switch RFS3 is further coupled between the second ground network transmit end GN2-Tx and the fourth electrical connection end 3401. The third radio frequency switch RFS3 is configured to connect the third satellite transmit end SAT3-Tx, the third satellite receive end SAT3-Rx, the positioning satellite receive end SAT4-Rx, or the second ground network transmit end GN2-Tx to the fourth electrical connection end 3401. Similarly, when the third sub-chip 3233 controls the third radio frequency switch RFS3 to connect the second ground network transmit end GN2-Tx to the fourth electrical connection end 3401, the fourth stub 3004 may serve as a receive antenna and a transmit antenna of the second ground network communication antenna 371 to receive and send the signal of the second ground network operating frequency band (for example, 2400/MHz to 2483.5/MHz). A process in which the third radio frequency switch RFS3 controls the third satellite transmit end SAT3-Tx, the third satellite receive end SAT3-Rx, and the positioning satellite receive end SAT4-Rx to be connected to the fourth electrical connection end 3401 is the same as that described above, and details are not described herein again.

The foregoing descriptions are provided by using an example in which the fourth stub 3004 is reused as the second ground network communication antenna 371, the satellite positioning antenna 361, and the third satellite communication antenna 351. In some other embodiments of this application, the fourth stub 3004 may be reused as any two of the second ground network communication antenna 371, the satellite positioning antenna 361, and the third satellite communication antenna 351. In addition, FIG. 30 is described by using an example in which the third satellite transmit end SAT3-Tx, the third satellite receive end SAT3-Rx, the positioning satellite receive end SAT4-Rx, and the second ground network transmit end GN2-Tx are all integrated into one communication chip, for example, the third sub-chip 3233. In some other embodiments of this application, the third satellite transmit end SAT3-Tx and the third satellite receive end SAT3-Rx may be disposed in a same chip, and the third satellite receive end SAT3-Rx and the positioning satellite receive end SAT4-Rx may be disposed in different chips.

In some other embodiments of this application, still as shown in FIG. 30, the antenna structure 31 may further include a third ground network communication antenna 381, the third ground network communication antenna 381 may include a fifth stub 3005, and the fifth stub 3005 has a fifth electrical connection end 3501. The fifth stub 3005 may be spaced apart from the first stub 3001. For example, when the electronic device 01 is a foldable phone shown in FIG. 30, the first stub 3001 and the fifth stub 3005 may be respectively located on the first metal frame 101a and the second metal frame 101b. In addition, the fifth stub 3005 may be further located on a same metal frame as the second stub 3002, the third stub 3003, and the fourth stub 3004, for example, on the second metal frame 101b. In addition, the fifth stub 3005 is spaced apart from the second stub 3002, the third stub 3003, and the fourth stub 3004.

In addition, the communication chip 32 further has a third ground network transmit end GN3-Tx, and the third ground network transmit end GN3-Tx is configured to send a radio frequency signal of a third ground network operating frequency band. For example, the third ground network communication antenna 381 may be a Wi-Fi antenna or a cellular antenna. The following uses an example in which the third ground network communication antenna 381 is a Wi-Fi antenna. For example, the third ground network operating frequency band may include a Wi-Fi 5G frequency band (5150/MHz to 5825/MHz). In addition, the third ground network transmit end GN3-Tx may be coupled to the fifth electrical connection end 3501 of the fifth stub 3005. In this way, the fifth stub 3005 may serve as the third ground network communication antenna 381 to receive and send the signal of the third ground network operating frequency band.

In some other embodiments of this application, the third ground network transmit end GN3-Tx and the fifth electrical connection end 3501 of the fifth stub 3005 may be further coupled to a radio frequency switch, to select, according to a requirement, whether the third ground network communication antenna 381 is in an operating state.

FIG. 30 is described by using an example in which the antenna structure 31 of the electronic device 01 includes the first ground network communication antenna 312, the first satellite communication antenna 311, the second satellite communication antenna 341, the third satellite communication antenna 351, the satellite positioning antenna 361, the second ground network communication antenna 371, and the third ground network communication antenna 381. In this case, the electronic device 01 may integrate three satellite antennas: the first satellite communication antenna 311 and the second satellite communication antenna 341 that are configured to make a voice call and receive and send a short message service message, and the third satellite communication antenna 351 configured to receive and send a short message service message. Therefore, at least three satellite communication antennas may be integrated in limited space of the electronic device 01.

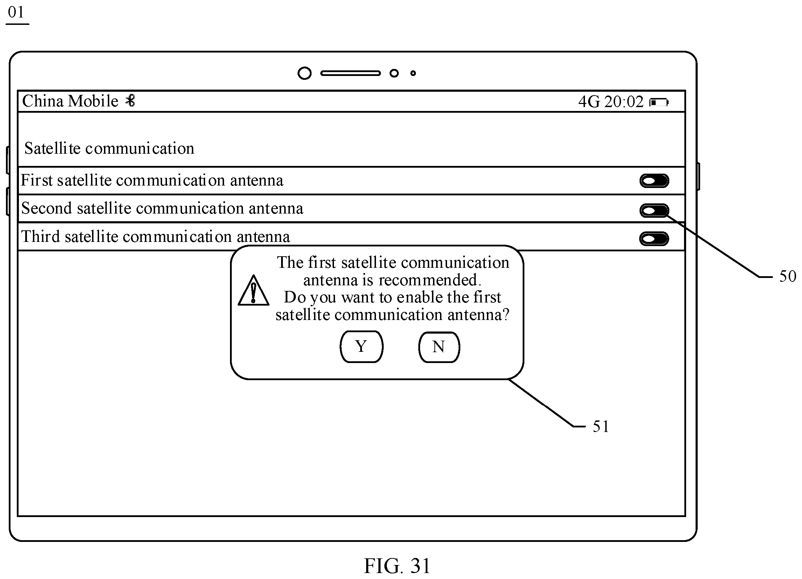

In this way, the user may select different satellite antennas for communication according to different requirements, a region in which the user is located, or the like, thereby improving user experience. For example, as shown in FIG. 31, on a satellite communication interface, the electronic device 01 may display options of a plurality of satellite antennas. The user may select to enable at least one satellite antenna function by using a hand touch button 50. Alternatively, a display interface of the electronic device 01 may recommend an available satellite antenna to the user based on the region in which the user is located. For example, a prompt box 51 shown in FIG. 31 is displayed, and the user may select, according to content in the prompt box 51, whether to enable a recommended satellite function. In the prompt box 51, a "Y" button indicates to enable the first satellite communication antenna, and an "N" button indicates not to enable the first satellite communication antenna.

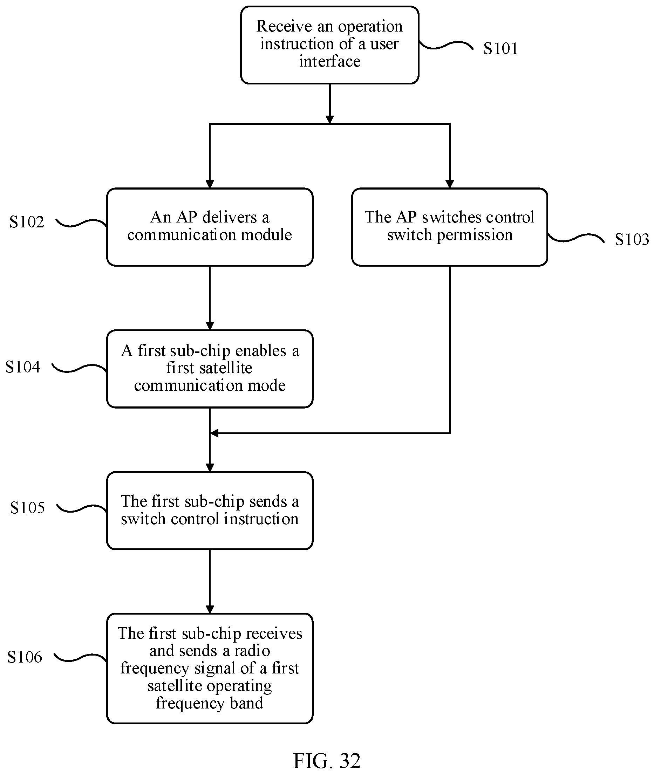

The following uses the antenna structure 31 shown in FIG. 30 as an example to describe a process of controlling the first satellite communication antenna 311, the second satellite communication antenna 341, and the third satellite communication antenna 351. For example, the process of controlling the first satellite communication antenna 311 may include S101 to S106 shown in FIG. 32.

S101: Receive an operation instruction of a user interface.

For example, the operation instruction in S101 may be an operation instruction generated when the user triggers the button 50 in FIG. 31, or an operation instruction generated when the user triggers the "Y" button in the prompt box 51 shown in FIG. 31. The foregoing operation instruction indicates that the user needs to enable the first satellite communication antenna.

S102: The AP delivers a communication module.

For example, the AP may deliver the communication module to the first sub-chip 3211 in FIG. 30 according to the operation instruction in S101.

S103: The AP switches control switch permission.

For example, the AP may determine priorities of the radio frequency switches and the gating switches in the antenna apparatus according to the operation instruction in S101, and switch permission of the foregoing switches based on the priorities.

S104: The first sub-chip enables a first satellite communication mode.

For example, the first sub-chip 3211 in FIG. 30 may enable the first satellite communication mode based on the communication module delivered by the AP in S102 and a result of switching the control switch permission by the AP in S103, so that the first satellite communication antenna 311 is in an operating state.

S105: The first sub-chip sends a switch control instruction.

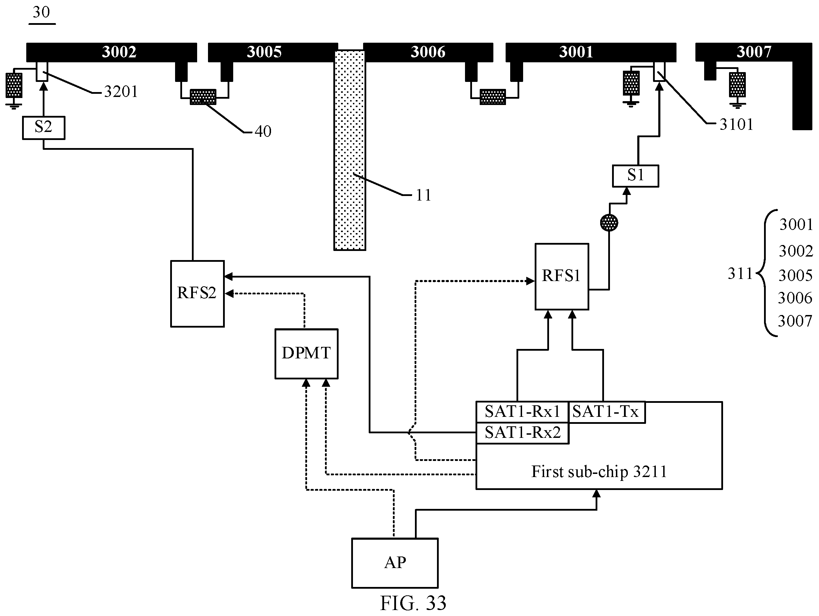

For example, the first sub-chip 3211 in FIG. 33 may send the switch control instruction to the first radio frequency switch RFS1, the first gating switch S1, and the second radio frequency switch RFS2. In this case, the first radio frequency switch RFS1 may connect the first satellite transmit end SAT1-Tx or the first satellite first receive end SAT1-Rx1 to the first gating switch S1 under control of a control signal sent by the first sub-chip 3211. The first gating switch S1 may connect the first radio frequency switch RFS1 to the first electrical connection end 3101 of the first stub 3001 under control of a control signal sent by the first sub-chip 3211, so that the first stub 3001 can serve as a receive antenna and a transmit antenna of the first satellite communication antenna 311. In addition, the second radio frequency switch RFS2 may connect the first satellite second receive end SAT1-Rx2 to the second electrical connection end 3201 of the second stub 3002 under control of a control signal sent by the first sub-chip 3211, so that the second stub 3002 serves as a receive antenna of the first satellite communication antenna 311.

In addition, still as shown in FIG. 33, the first satellite communication antenna 311 may further include the fifth stub 3005, a sixth stub 3006, and a seventh stub 3007 that serve as parasitic antennas. The foregoing parasitic stub is coupled to a tuning switch assembly 40. The first sub-chip 3211 may send a control instruction to each tuning switch assembly 40, so that the parasitic stub can serve as a receive antenna and a transmit antenna of the first satellite communication antenna 311, thereby adjusting an antenna aperture of the first satellite communication antenna 311.

S106: The first sub-chip receives and sends the radio frequency signal of the first satellite operating frequency band.

For example, the first satellite transmit end SAT1-Tx of the first sub-chip 3211 shown in FIG. 33 sends the radio frequency signal of the first satellite operating frequency band, so that the second stub 3002, the fifth stub 3005, the sixth stub 3006, the first stub 3001, and the seventh stub 3007 radiate the radio frequency signal of the first satellite operating frequency band to space in a form of an electromagnetic wave, to implement sending of the radio frequency signal. Alternatively, the first stub 3001, the sixth stub 3006, and the seventh stub 3007 receive an electromagnetic wave in space, and transmit the electromagnetic wave to the first satellite first receive end SAT1-Rx1 of the first sub-chip 3211. In addition, the second stub 3002 and the fifth stub 3005 receive the electromagnetic wave in space, and transmit the electromagnetic wave to the second satellite second receive end SAT2-Rx2, to implement receiving of the radio frequency signal of the first satellite operating frequency band.

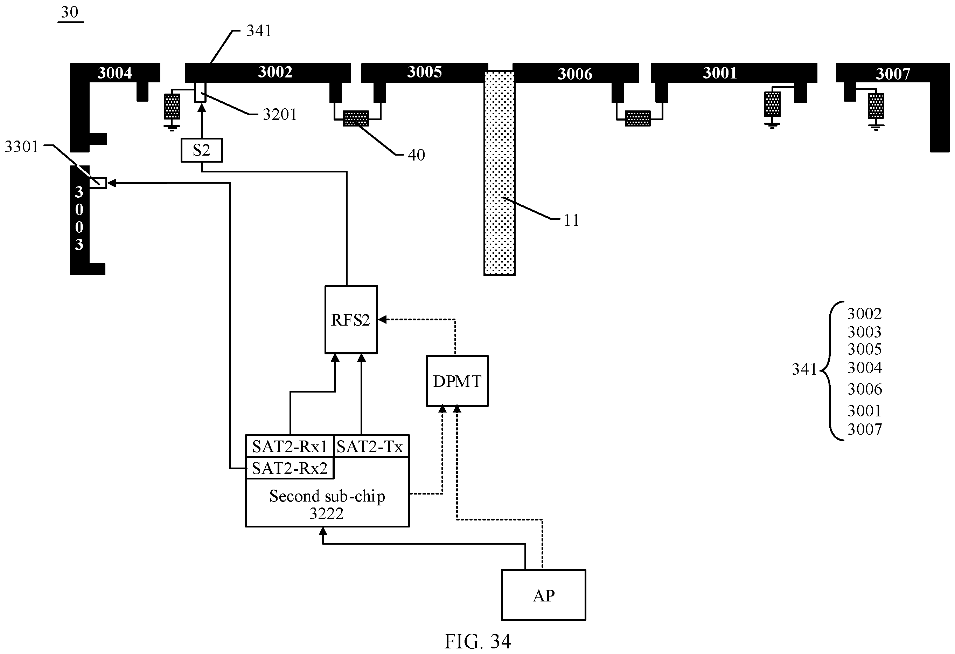

In some other embodiments of this application, when the electronic device 01 enables the second satellite communication antenna 341 based on a user interface operation, a control method of the second satellite communication antenna 341 may be similar to the method shown in FIG. 32. The second sub-chip 3222 in FIG. 34 may send a switch control instruction to the second radio frequency switch RFS2 and the second gating switch S2. In this case, the second radio frequency switch RFS2 may connect the second satellite transmit end SAT2-Tx or the second satellite first receive end SAT2-Rx1 to the second gating switch S2 under control of a control signal sent by the second sub-chip 3222. The second gating switch S2 may connect the second radio frequency switch RFS2 to the second electrical connection end 3201 of the second stub 3002 under control of a control signal sent by the second sub-chip 3222, so that the second stub 3002 can serve as a receive antenna and a transmit antenna of the second satellite communication antenna 341. In addition, the second radio frequency switch RFS2 may connect the second satellite second receive end SAT2-Rx2 to the third electrical connection end 3301 of the third stub 3003 under control of a control signal sent by the second sub-chip 3222, so that the third stub 3003 serves as a receive antenna of the second satellite communication antenna 341.

In addition, still as shown in FIG. 34, the second satellite communication antenna 341 may further include a fourth stub 3004, a fifth stub 3005, a sixth stub 3006, and a seventh stub 3007 that serve as parasitic antennas. The foregoing parasitic stub is coupled to a tuning switch assembly 40. The second sub-chip 3222 may send a control instruction to each tuning switch assembly 40, so that the parasitic stub can serve as a receive antenna and a transmit antenna of the second satellite communication antenna 341, thereby adjusting an antenna aperture of the second satellite communication antenna 341.

For example, the second satellite transmit end SAT2-Tx of the second sub-chip 3222 shown in FIG. 34 sends the radio frequency signal of the second satellite operating frequency band, so that the second stub 3002, the fifth stub 3005, the sixth stub 3006, the first stub 3001, and the seventh stub 3007 radiate the radio frequency signal of the second satellite operating frequency band to space in a form of an electromagnetic wave, to implement sending of the radio frequency signal. Alternatively, the second stub 3002, the fifth stub 3005, the sixth stub 3006, the first stub 3001, and the seventh stub 3007 receive an electromagnetic wave in space, and transmit the electromagnetic wave to the second satellite first receive end SAT2-Rx1 of the second sub-chip 3222. In addition, the third stub 3003 and the fourth stub 3004 receive the electromagnetic wave in space, and transmit the electromagnetic wave to the second satellite second receive end SAT2-Rx2 of the second sub-chip 3222, to implement receiving of the radio frequency signal of the second satellite operating frequency band.

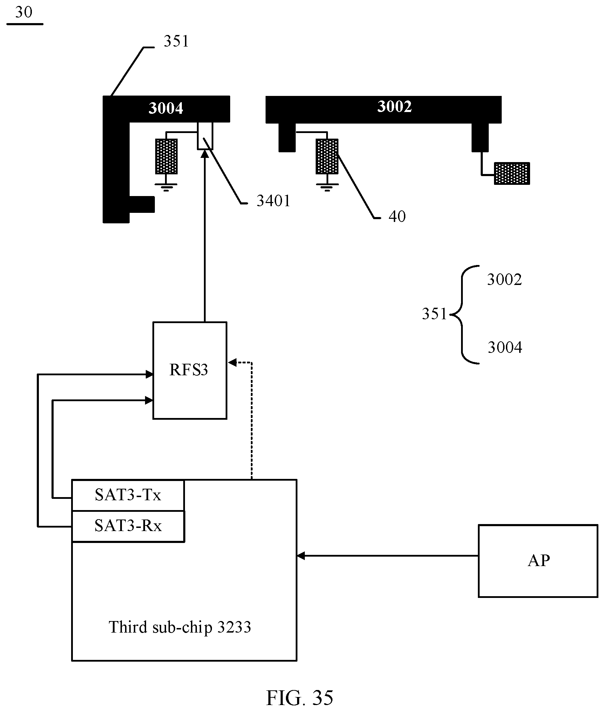

In some other embodiments of this application, when the electronic device 01 enables the third satellite communication antenna 351 based on a user interface operation, a control method of the third satellite communication antenna 351 may be similar to the method shown in FIG. 32. The third sub-chip 3233 in FIG. 35 may send a switch control instruction to the third radio frequency switch RFS3. In this case, the third radio frequency switch RFS3 may connect the third satellite transmit end SAT3-Tx or the third satellite receive end SAT3-Rx to the fourth electrical connection end 3401 of the fourth stub 3004 under control of a control signal sent by the third sub-chip 3233, so that the fourth electrical connection end 3401 can serve as a receive antenna and a transmit antenna of the third satellite communication antenna 351.

In addition, still as shown in FIG. 35, the third satellite communication antenna 351 may further include a second stub 3002 serving as a parasitic antenna. The foregoing parasitic stub is coupled to a tuning switch assembly 40. The third sub-chip 3233 may send a control instruction to each tuning switch assembly 40, so that the parasitic stub can serve as a receive antenna and a transmit antenna of the third satellite communication antenna 351, thereby adjusting an antenna aperture of the third satellite communication antenna 351.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An antenna apparatus, wherein the antenna apparatus comprises a ground plane and an antenna structure, and the antenna apparatus has a clearance area between the ground plane and the antenna structure;
the antenna structure comprises a first satellite communication antenna and a first ground network communication antenna, the first satellite communication antenna comprises a first stub, the first stub has a first electrical connection end, and the first ground network communication antenna comprises the first stub; and
the antenna apparatus further comprises:
a communication chip, having a first satellite transmit end and a first ground network transmit end, wherein the first satellite transmit end is configured to send a radio frequency signal of a first satellite operating frequency band, and the first ground network transmit end is configured to send a radio frequency signal of a first ground network operating frequency band;
a first power amplifier, coupled to the first satellite transmit end;
a second power amplifier, coupled to the first ground network transmit end, wherein efficiency of the first power amplifier is different from efficiency of the second power amplifier; and
a first gating switch, coupled between the first power amplifier and the first electrical connection end, wherein the first gating switch is further coupled between the second power amplifier and the first electrical connection end, the first gating switch is located in the clearance area, and the first gating switch is configured to connect the first satellite transmit end or the first ground network transmit end to the first electrical connection end.

2. The antenna apparatus according to claim 1, wherein the communication chip further comprises a first satellite first receive end, and the first satellite first receive end is configured to receive the radio frequency signal of the first satellite operating frequency band; and
the antenna apparatus further comprises a first radio frequency switch, the first radio frequency switch is coupled between the first satellite transmit end and the first gating switch, the first radio frequency switch is further coupled between the first satellite first receive end and the first gating switch, and the first radio frequency switch is configured to connect the first satellite transmit end or the first satellite first receive end to the first gating switch.

3. The antenna apparatus according to claim 1 or 2, wherein the antenna apparatus further comprises:
a first radio frequency test base, coupled between the first gating switch and the first satellite transmit end; and
a second radio frequency test base, coupled between the first gating switch and the first ground network transmit end.

4. The antenna apparatus according to claim 3, wherein the antenna apparatus further comprises:
a first impedance matching network, wherein
the first impedance matching network is coupled between the first gating switch and at least one of the first radio frequency test base or the second radio frequency test base; or
a first part of the first impedance matching network is coupled between the first gating switch and at least one of the first radio frequency test base or the second radio frequency test base, and a second part of the first impedance matching network is coupled between the first gating switch and the first electrical connection end.

5. The antenna apparatus according to claim 1 or 2, wherein the antenna apparatus further comprises:
a first impedance matching network, coupled between the first gating switch and the first electrical connection end.

6. The antenna apparatus according to any one of claims 1 to 5, wherein
the first satellite communication antenna further comprises a second stub, the second stub is spaced apart from the first stub, and the second stub has a second electrical connection end; and
the communication chip further has a first satellite second receive end, the first satellite second receive end is configured to receive the radio frequency signal of the first satellite operating frequency band, and the first satellite second receive end is coupled to the second electrical connection end.

7. The antenna apparatus according to claim 6, wherein
the antenna structure further comprises a second satellite communication antenna, and the second satellite communication antenna comprises the second stub;
the communication chip has a second satellite transmit end and a second satellite first receive end, the second satellite transmit end is configured to send a radio frequency signal of a second satellite operating frequency band, and the second satellite first receive end is configured to receive the radio frequency signal of the second satellite operating frequency band; and
the antenna apparatus further comprises a second radio frequency switch, wherein the second radio frequency switch is coupled between the first satellite second receive end and the second electrical connection end, the second radio frequency switch is further coupled between the second satellite transmit end and the second electrical connection end, the second radio frequency switch is further coupled between the second satellite first receive end and the second electrical connection end, and the second radio frequency switch is configured to connect the first satellite second receive end, the second satellite transmit end, or the second satellite first receive end to the second electrical connection end.

8. The antenna apparatus according to claim 7, wherein the antenna apparatus further comprises:
a second gating switch, coupled between the second radio frequency switch and the second electrical connection end, wherein the second gating switch is located in the clearance area; and
a second impedance matching network, wherein at least a part of the second impedance matching network is coupled between the second gating switch and the second electrical connection end; or at least a part of the second impedance matching network is coupled to a side that is of the second gating switch and that is away from the second electrical connection end, wherein
when the first gating switch connects the first ground network transmit end to the first electrical connection end, the second gating switch is configured to disconnect at least a part of the second impedance matching network from the second electrical connection end.

9. The antenna apparatus according to any one of claims 6 to 8, wherein
the first electrical connection end is located at an end that is of the first stub and that is away from the second stub; and
the second electrical connection end is located at an end that is of the second stub and that is away from the first stub.

10. The antenna apparatus according to claim 8 or 9, wherein
the second satellite communication antenna further comprises a third stub, the third stub is spaced apart from the first stub and the second stub, and the third stub has a third electrical connection end; and
the communication chip further has a second satellite second receive end, the second satellite second receive end is configured to receive the radio frequency signal of the second satellite operating frequency band, and the second satellite second receive end is coupled to the third electrical connection end.

11. The antenna apparatus according to claim 8 or 9, wherein
the second satellite communication antenna further comprises the first stub; and
the communication chip further has a second satellite second receive end, the second satellite second receive end is configured to receive the radio frequency signal of the second satellite operating frequency band, and the second satellite second receive end is coupled to the first electrical connection end.

12. The antenna apparatus according to any one of claims 1 to 11, wherein
the antenna structure further comprises a third satellite communication antenna, the third satellite communication antenna comprises a fourth stub, the fourth stub is spaced apart from the first stub, and the fourth stub has a fourth electrical connection end;
the communication chip further has a third satellite transmit end and a third satellite receive end, the third satellite transmit end is configured to send a radio frequency signal of a third satellite operating frequency band, and the third satellite receive end is configured to receive the radio frequency signal of the third satellite operating frequency band; and
the antenna apparatus further comprises a third radio frequency switch, wherein the third radio frequency switch is coupled between the third satellite transmit end and the fourth electrical connection end, the third radio frequency switch is further coupled between the third satellite receive end and the fourth electrical connection end, and the third radio frequency switch is configured to connect the third satellite transmit end or the third satellite receive end to the fourth electrical connection end.

13. The antenna apparatus according to claim 12, wherein
the antenna structure further comprises a satellite positioning antenna, and the satellite positioning antenna comprises the fourth stub;
the communication chip further has a positioning satellite receive end, and the positioning satellite receive end is configured to receive a radio frequency signal of a fourth satellite operating frequency band; and
the third radio frequency switch is further coupled between the positioning satellite receive end and the fourth electrical connection end, and the third radio frequency switch is configured to connect the third satellite transmit end, the third satellite receive end, or the positioning satellite receive end to the fourth electrical connection end.

14. The antenna apparatus according to claim 12 or 13, wherein
the antenna structure further comprises a second ground network communication antenna, and the second ground network communication antenna comprises the fourth stub; and
the communication chip further has a second ground network transmit end, the second ground network transmit end is configured to send a radio frequency signal of a second ground network operating frequency band, the third radio frequency switch is further coupled between the second ground network transmit end and the fourth electrical connection end, and the third radio frequency switch is configured to connect the third satellite transmit end, the third satellite receive end, or the second ground network transmit end to the fourth electrical connection end.

15. The antenna apparatus according to any one of claims 1 to 14, wherein
the antenna structure further comprises a third ground network communication antenna, the third ground network communication antenna comprises a fifth stub, the fifth stub is spaced apart from the first stub, and the fifth stub has a fifth electrical connection end; and
the communication chip further has a third ground network transmit end, the third ground network transmit end is configured to send a radio frequency signal of the third ground network operating frequency band, and the third ground network transmit end is coupled to the fifth electrical connection end.

16. The antenna apparatus according to any one of claims 1 to 15, wherein the communication chip comprises:
a first satellite communication chip, having the first satellite transmit end; and
a first ground network communication chip, having the first ground network transmit end.

17. The antenna apparatus according to claim 16, wherein the first ground network communication chip is a cellular communication chip, and the first ground network operating frequency band is a cellular communication frequency band.

18. An antenna apparatus, wherein the antenna apparatus comprises:
an antenna structure, comprising:
a first satellite communication antenna, comprising a first stub and a second stub, wherein the first stub is spaced apart from the second stub, the first stub has a first electrical connection end, and the second stub has a second electrical connection end; and
a second satellite communication antenna, comprising the second stub; and
a communication chip, having a first satellite transmit end, a first satellite first receive end, a first satellite second receive end, a second satellite transmit end, and a second satellite first receive end, wherein the first satellite transmit end and the first satellite first receive end are coupled to the first electrical connection end, and the first satellite second receive end, the second satellite transmit end, and the second satellite first receive end are coupled to the second electrical connection end, wherein
the first satellite transmit end is configured to send a radio frequency signal of a first satellite operating frequency band, and the first satellite first receive end and the first satellite second receive end are configured to receive the radio frequency signal of the first satellite operating frequency band; the second satellite transmit end is configured to send a radio frequency signal of a second satellite operating frequency band, and the second satellite first receive end is configured to receive the radio frequency signal of the second satellite operating frequency band; and when the first satellite communication antenna or the second satellite communication antenna is in an operating state, the antenna in the operating state is configured to implement at least one of a satellite call or satellite short message service message receiving and sending.

19. The antenna apparatus according to claim 18, wherein the antenna structure further comprises a first ground network communication antenna, the first ground network communication antenna comprises the first stub, the communication chip further has a first ground network transmit end, and the first ground network transmit end is coupled to the first electrical connection end.

20. The antenna apparatus according to claim 18 or 19, wherein the antenna apparatus further comprises:
a first gating switch, coupled between the first satellite transmit end and the first electrical connection end;
a first radio frequency switch, wherein the first radio frequency switch is coupled between the first satellite transmit end and the first gating switch, the first radio frequency switch is further coupled between the first satellite first receive end and the first gating switch, and the first radio frequency switch is configured to connect the first satellite transmit end or the first satellite first receive end to the first gating switch; and
a second radio frequency switch, wherein the second radio frequency switch is coupled between the first satellite second receive end and the second electrical connection end, the second radio frequency switch is further coupled between the second satellite transmit end and the second electrical connection end, the second radio frequency switch is further coupled between the second satellite first receive end and the second electrical connection end, and the second radio frequency switch is configured to connect the first satellite second receive end, the second satellite transmit end, or the second satellite first receive end to the second electrical connection end.

21. The antenna apparatus according to claim 20, wherein
the second satellite communication antenna further comprises a third stub, the third stub is spaced apart from the first stub and the second stub, and the third stub has a third electrical connection end; and
the communication chip further has a second satellite second receive end, the second satellite second receive end is configured to receive the radio frequency signal of the second satellite operating frequency band, and the second satellite second receive end is coupled to the third electrical connection end.

22. The antenna apparatus according to claim 18 or 19, wherein
the second satellite communication antenna further comprises the first stub; and
the communication chip further has a second satellite second receive end, the second satellite second receive end is configured to receive the radio frequency signal of the second satellite operating frequency band, and the second satellite second receive end is coupled to the first electrical connection end.

23. The antenna apparatus according to any one of claims 18 to 22, wherein
the antenna structure further comprises a third satellite communication antenna, the third satellite communication antenna comprises a fourth stub, the fourth stub is spaced apart from the first stub, and the fourth stub has a fourth electrical connection end;
the communication chip further has a third satellite transmit end and a third satellite receive end, the third satellite transmit end is configured to send a radio frequency signal of a third satellite operating frequency band, and the third satellite receive end is configured to receive the radio frequency signal of the third satellite operating frequency band; and
the antenna apparatus further comprises a third radio frequency switch, wherein the third radio frequency switch is coupled between the third satellite transmit end and the fourth electrical connection end, the third radio frequency switch is further coupled between the third satellite receive end and the fourth electrical connection end, and the third radio frequency switch is configured to connect the third satellite transmit end or the third satellite receive end to the fourth electrical connection end.

24. An electronic device, comprising:
at least one metal frame; and
the antenna apparatus according to any one of claims 1 to 17 or any one of claims 18 to 23, wherein the metal frame comprises the antenna structure in the antenna apparatus.

25. The electronic device according to claim 24, wherein
the metal frame comprises a top frame, a first side frame, a bottom frame, and a second side frame that are sequentially connected end to end; and the top frame comprises the antenna structure.

26. An electronic device, comprising:
a hinge;
two metal frames, respectively a first metal frame and a second metal frame, wherein the first metal frame and the second metal frame are separately rotatably connected to the hinge; and
the antenna apparatus according to any one of claims 18 to 23, wherein
the first metal frame comprises the first stub of the antenna structure, the second metal frame comprises the second stub of the antenna structure, the first stub and the second stub are symmetrically disposed with respect to the hinge, and the first stub and the second stub are located at a same end of the hinge.
